(19) 

Europäisches Patentamt

European Patent Office

Office européen des brevets

(11) **EP 4 131 802 B1**

(12) **EUROPEAN PATENT SPECIFICATION**

(45) Date of publication and mention
of the grant of the patent:
**01.10.2025 Bulletin 2025/40**

(21) Application number: **21795718.2**

(22) Date of filing: **29.04.2021**

(51) International Patent Classification (IPC):
*H04B 10/2575* (2013.01)   *H04J 14/02* (2006.01)
*H04Q 11/00* (2006.01)

(52) Cooperative Patent Classification (CPC):
**H04B 10/25758;** H04J 14/0202

(86) International application number:
**PCT/CN2021/091109**

(87) International publication number:
**WO 2021/219094 (04.11.2021 Gazette 2021/44)**

(54) **COMMUNICATION DEVICE AND COMMUNICATION SYSTEM**

KOMMUNIKATIONSVORRICHTUNG UND KOMMUNIKATIONSSYSTEM

DISPOSITIF DE COMMUNICATION ET SYSTÈME DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.04.2020   CN 202010361731**

(43) Date of publication of application:
**08.02.2023   Bulletin 2023/06**

(73) Proprietor: **Huawei Technologies Co., Ltd.
Shenzhen, Guangdong 518129 (CN)**

(72) Inventors:
• **LI, Xu
  Shenzhen, Guangdong 518129 (CN)**
• **LV, Yibo
  Shenzhen, Guangdong 518129 (CN)**
• **WANG, Tianxiang
  Shenzhen, Guangdong 518129 (CN)**
• **ZHANG, Weiwei
  Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2019/210783      WO-A1-2019/228608
CN-A- 102 457 458        CN-A- 109 861 754
CN-A- 110 661 573        US-A1- 2017 093 495**

**Description**

This application claims priority to Chinese Patent Application No. 202010361731.4, filed with the China National Intellectual Property Administration on April 30, 2020 and entitled "COMMUNICATION DEVICE AND SYSTEM".

**TECHNICAL FIELD**

Embodiments of this application relate to communication technologies, and in particular, to a communication device and system.

**BACKGROUND**

A radio over fiber (radio over fiber, RoF) technology is a communication technology that combines optical fiber communication and wireless communication. A RoF system includes a central-side communication device and a remote-side communication device. An electro-optical signal conversion apparatus is integrated into the central-side communication device, and an optical-electro signal conversion apparatus is integrated into the remote-side communication device. The central-side communication device converts a generated baseband signal into a radio frequency signal, converts the radio frequency signal into an optical signal by using the electro-optical signal conversion apparatus, and then transmits the optical signal to the remote-side communication device through an optical fiber. The remote-side communication device converts the received optical signal into a radio frequency signal by using the optical-electro signal conversion apparatus, and further transmits the radio frequency signal through an antenna, for access and use by a user terminal.

The electro-optical signal conversion apparatus is prone to generating nonlinear distortion in a signal conversion process. This results in low quality of the optical signal transmitted to the remote-side communication device. In a conventional technology, to eliminate nonlinear distortion, an electro-optical signal conversion apparatus may be further integrated into the remote-side communication device. A part of the radio frequency signal is transmitted through the antenna, a part of the radio frequency signal is converted into an optical signal by using the electro-optical signal conversion apparatus, and then the optical signal is fed back to the central-side communication device. After converting the fed-back optical signal into a baseband signal, the central-side communication device compares the baseband signal with the baseband signal output by the central-side communication device and performs analysis to determine distortion of the baseband signal, and further adjusts a parameter of the baseband signal to compensate for nonlinear distortion in the signal conversion process.

However, in a nonlinear distortion compensation method in the conventional technology, the remote-side communication device needs to feed back the optical signal. To avoid disposing an additional optical fiber to transmit the optical signal, the optical signal and uplink data share a same link. In this manner, additional control logic needs to be configured on the central-side communication device and the remote-side communication device, to implement switching between the uplink data and the fed-back optical signal by the central-side communication device. This results in high complexity.

WO 2019/228608 A1 relates to a remote radio unit (RRU) for a base transceiver station. The remote radio unit comprises: a noise generator configured to provide a radio frequency (RF) noise signal having predefined statistical properties, in particular second-order statistics and/or higher-order statistics; a communication interface configured to transmit the RF noise signal as a stimulus signal over a RoF uplink channel between the remote radio unit and a central unit of the base transceiver station for determining a pre-distortion of a target signal to be transmitted by the remote radio unit, wherein the communication interface is further configured to receive the pre-distorted target signal over a RoF downlink channel between the remote radio unit and the central unit of the base transceiver station; and an antenna for transmitting the pre-distorted target signal received by the communication interface.

WO 2019210783 A1 provides a system for transmitting a RF signal from a source to a destination. The disclosed system includes an RF signal source configured to produce an RF signal at a transmission frequency. The system further includes an optical transmission path for optically transmitting the RF signal towards the destination. The system also includes a feedback path for transmitting a feedback signal received proximate the destination towards the RF signal source. The feedback path includes a frequency shifter for shifting the frequency of the feedback signal to a feedback frequency different than the transmission frequency.

**SUMMARY**

Embodiments of this application provide a communication device and system, to compensate for nonlinear distortion in a RoF network system, and also avoid a complex disposing manner caused when a feedback link is established in a remote-side communication device.

The invention is defined by the attached set of claims. Further details of the disclosed methods, devices and system are provided in the following, which are helpful for understanding the claimed invention.

According to a first aspect, an embodiment of this application provides a communication device, including: a digital processing apparatus, a first processing apparatus, an optical splitter, a second processing apparatus, and a local oscillator. The first processing apparatus is separately connected to the digital processing apparatus, the local oscillator, and the optical splitter. The optical splitter is further connected to the second processing apparatus. The second processing apparatus is further connected to the local oscillator and the digital processing apparatus.

In this embodiment of this application, the digital processing apparatus is configured to generate a first baseband signal, and output the first baseband signal to the first processing apparatus. The first processing apparatus is configured to convert the first baseband signal into a first radio frequency signal, convert the first radio frequency signal into an optical signal, and output the optical signal to the optical splitter. The optical splitter is configured to split the optical signal into a first optical signal and a second optical signal, output the first optical signal to at least one remote-side communication device, and output the second optical signal to the second processing apparatus. The second processing apparatus is configured to convert the second optical signal into a second radio frequency signal, convert the second radio frequency signal into a second baseband signal, and output the second baseband signal to the digital processing apparatus. The digital processing apparatus is further configured to perform nonlinear compensation on the first baseband signal based on the first baseband signal and the second baseband signal.

In this embodiment of this application, nonlinear distortion in a RoF network system mainly occurs in a central-side communication device. A feedback link is established in the central-side communication device in this embodiment of this application, so that nonlinear distortion in the RoF network system can be compensated for, an additional optical fiber does not need to be disposed, and complex control logic can be avoided when the feedback link needs to be established between the central-side communication device and the remote-side communication device. This simplifies a disposing manner on a remote side.

It should be understood that, in a possible implementation, the digital processing apparatus in this embodiment of this application includes a baseband resource pool and a nonlinear compensation apparatus. The baseband resource pool is connected to the nonlinear compensation apparatus. The nonlinear compensation apparatus is further separately connected to the first processing apparatus and the second processing apparatus.

The baseband resource pool is configured to generate N first baseband subsignals, and output the N first baseband subsignals to the first processing apparatus by using the nonlinear compensation apparatus. The first processing apparatus is specifically configured to convert the first baseband subsignals into first radio frequency subsignals, and convert the N first radio frequency subsignals into the optical signal. The second processing apparatus is specifically configured to convert the second optical signal into N second radio frequency subsignals, and convert the second radio frequency subsignals into second baseband subsignals. The nonlinear compensation apparatus is configured to perform nonlinear compensation on the first baseband subsignals based on the first baseband subsignals and the second baseband subsignals corresponding to the first baseband subsignals.

It should be noted that, in this embodiment of this application, the first baseband signal includes the N first baseband subsignals, the second baseband signal includes the N second baseband subsignals, the first radio frequency signal includes the N first radio frequency subsignals, the second radio frequency signal includes the N second radio frequency subsignals, the first radio frequency subsignals one-to-one correspond to the second radio frequency subsignals based on frequencies, and N is an integer greater than or equal to 1.

In this embodiment of this application, a wavelength of the optical signal may be 1310 nm. It should be noted that, in this embodiment of this application, for the optical signal with a 1310 nm wavelength, nonlinear distortion caused by dispersion of the optical signal in the RoF network system is low and may be ignored. Therefore, in this embodiment of this application, nonlinearity of a component in the central-side communication device may be locally compensated for to improve overall performance of the RoF network system. However, it should be noted that the technical solution in this embodiment of this application may also be applied to an optical fiber communication system corresponding to an optical signal with a 1550 nm wavelength and an optical fiber communication system corresponding to another different wavelength.

It should be noted that when N is equal to 1 and when N is greater than 1, the first processing apparatus and the second processing apparatus in the communication device in this embodiment of this application have different structures. Therefore, the following describes a structure of the communication device in two cases: when N is equal to 1 and when N is greater than 1.

When N is equal to 1, a structure of the communication device provided in this embodiment of this application is applicable to compensation for nonlinear distortion of a single-wavelength and single-frequency signal.

In a possible implementation, the first processing apparatus may include a digital-to-analog conversion apparatus, a first frequency mixer, a bandpass filter, and an electro-optical signal conversion apparatus. The second processing apparatus may include an optical-electro signal conversion apparatus, a second frequency mixer, a low-pass filter, and an analog-to-digital conversion apparatus. The digital-to-analog conversion apparatus is separately connected to the nonlinear compensation apparatus and the first frequency mixer. The bandpass filter is separately connected to the first frequency mixer and the electro-optical signal conversion apparatus. The first frequency mixer is further connected to the local oscillator. The electro-optical signal conversion apparatus is further connected to the optical splitter. The second frequency mixer is separately connected to the optical-electro signal conversion apparatus, the low-pass filter, and the local oscillator. The analog-to-digital conversion apparatus is separately connected to the low-pass filter and the nonlinear compensation apparatus. It should be understood that a function of each component in the communication device is not described in the summary part. For a specific function, refer to related descriptions in the following embodiments. A possible structure of the communication device is described in detail in the summary part.

In this manner, the first processing apparatus may further include a variable attenuator and a low noise amplifier. The variable attenuator is separately connected to the bandpass filter and the low noise amplifier. The low noise amplifier is further connected to the electro-optical signal conversion apparatus. Optionally, the first processing apparatus may further include an optical domain amplifier. The optical domain amplifier is separately connected to the electro-optical signal conversion apparatus and the optical splitter. The optical domain amplifier is configured to amplify a power of the optical signal. Optionally, the second processing apparatus may further include an electrical domain amplifier. The electrical domain amplifier is separately connected to the low-pass filter and the analog-to-digital conversion apparatus.

The electrical domain amplifier is configured to amplify a power of the second radio frequency signal. Optionally, the second processing apparatus may further include an electrical domain amplifier. The electrical domain amplifier is separately connected to the digital-to-analog conversion apparatus and the low-pass filter.

In this manner, corresponding to a structure of the central-side network device, a third processing apparatus in the remote-side communication device may include an optical-electro signal conversion apparatus. The optical-electro signal conversion apparatus is connected to the optical splitter through an optical fiber. The optical-electro signal conversion apparatus is configured to convert the first optical signal into a radio frequency signal and output the radio frequency signal to an antenna. The antenna may output the radio frequency signal.

In this embodiment of this application, the electro-optical signal conversion apparatus may be an EML or a DML. The following describes a compensation manner of the nonlinear compensation apparatus when the electro-optical signal conversion apparatus is an EML or a DML. It should be understood that the nonlinear compensation apparatus in this embodiment includes a digital pre-distortion module and a parameter estimation module.

Manner 1: The electro-optical signal conversion apparatus is an external modulator laser or a direct modulator laser. The digital pre-distortion module is configured to perform pre-distortion processing on the first baseband signal based on a distortion parameter. The parameter estimation module is configured to update the distortion parameter based on the first baseband signal and the second baseband signal to perform nonlinear compensation on the first baseband signal. It should be understood that the nonlinear compensation manner used in the first manner is a one-dimensional DPD nonlinear compensation manner. The one-dimensional DPD nonlinear compensation manner is performing nonlinear compensation by using a one-dimensional DPD model. The one-dimensional DPD model is not limited to a polynomial model and a neural network model.

Manner 2: The electro-optical signal conversion apparatus is an external modulator laser.

The digital pre-distortion module is configured to perform pre-distortion processing on the first baseband signal based on a distortion parameter. The parameter estimation module is configured to: obtain a difference between a preset bias voltage and a half-wave voltage of the external modulator laser based on the first baseband signal and the second baseband signal; and update the distortion parameter based on the difference to perform nonlinear compensation on the first baseband signal. It should be understood that the nonlinear compensation manner used in the first manner is a compensation manner based on the difference between the half-wave voltage of the external modulator laser EML and the preset bias voltage.

When N is greater than 1, the following first describes a structure of the communication device in two possible implementations. The structure of the communication device in the two possible implementations is applicable to compensation for nonlinear distortion of a single-wavelength and multi-frequency signal.

In a possible implementation, the communication device further includes an electrical domain combiner and an electrical domain splitter. The electrical domain combiner is connected to the first processing apparatus. The electrical domain splitter is connected to the second processing apparatus. The first processing apparatus is specifically configured to convert the first baseband subsignals into the first radio frequency subsignals, and output the first radio frequency subsignals to the electrical domain combiner. The electrical domain combiner is configured to combine the N first radio frequency subsignals, and output a combined radio frequency signal to the first processing apparatus. The first processing apparatus is further specifically configured to convert the combined radio frequency signal into the optical signal. The second processing apparatus is specifically configured to convert the second optical signal into the second radio frequency signal, and output the second radio frequency signal to the electrical domain splitter. The electrical domain splitter is configured to split the second radio frequency signal into the N second radio frequency subsignals, and output the N second radio frequency subsignals to the second processing apparatus. The second processing apparatus is further specifically configured to convert the second radio frequency subsignals into the N second baseband subsignals.

In this manner, the first processing module includes an electro-optical signal conversion apparatus and N digital-to-analog conversion apparatuses. The second processing apparatus includes an optical-electro signal conversion apparatus and N analog-to-digital conversion apparatuses. There are N local oscillators. One local oscillator corresponds to one digital-to-analog conversion apparatus and one analog-to-digital conversion apparatus.

The electrical domain combiner is separately connected to the N digital-to-analog conversion apparatuses and the electro-optical signal conversion apparatus. The N digital-to-analog conversion apparatuses are further connected to the nonlinear compensation apparatus. Each local oscillator is separately connected to a corresponding digital-to-analog conversion apparatus and a corresponding analog-to-digital conversion apparatus. The optical splitter is separately connected to the electro-optical signal conversion apparatus and the optical-electro signal conversion apparatus. The electrical domain splitter is separately connected to the optical-electro signal conversion apparatus and the N analog-to-digital conversion apparatuses. The N analog-to-digital conversion apparatuses are all connected to the nonlinear compensation apparatus.

Optionally, in this manner, correspondingly the first processing module further includes N first frequency mixers and N bandpass filters. One digital-to-analog conversion apparatus corresponds to one first frequency mixer, one bandpass filter, and one local oscillator. The second processing apparatus further includes N second frequency mixers and N low-pass filters. One analog-to-digital conversion apparatus corresponds to one second frequency mixer, one low-pass filter, and one local oscillator. Optionally, the first processing apparatus further includes N variable attenuators and N low noise amplifiers. One bandpass filter corresponds to one variable attenuator and one low noise amplifier. Optionally, the first processing apparatus further includes an optical domain amplifier. Optionally, the second processing apparatus further includes an electrical domain amplifier. It should be understood that for a connection manner of the components in this manner, refer to the following Embodiment 4.

In a possible implementation, the communication device includes an electrical domain combiner and N electrical domain switches. The electrical domain splitter is connected to the second processing apparatus. The electrical domain switch is separately connected to the local oscillator and the second processing apparatus. One electrical domain switch corresponds to one first radio frequency subsignal.

For a processing manner of the first processing apparatus, refer to related descriptions in the foregoing possible implementations. The second processing apparatus is specifically configured to convert the second optical signal into the second radio frequency signal. The electrical domain switch is configured to control connection and disconnection of a feedback link of a second radio frequency subsignal corresponding to a first radio frequency subsignal. The second processing apparatus is further specifically configured to convert a fed-back second radio frequency subsignal into a second baseband subsignal. In this manner, the electrical domain switch may be controlled to feed back a second baseband subsignal at a specific frequency and perform nonlinear compensation on the signal at such frequency.

In this manner, the first processing module includes an electro-optical signal conversion apparatus and N digital-to-analog conversion apparatuses. The second processing apparatus includes an optical-electro signal conversion apparatus and an analog-to-digital conversion apparatus. There are N local oscillators. One local oscillator corresponds to one digital-to-analog conversion apparatus and one electrical domain switch. The electrical domain combiner is separately connected to the N digital-to-analog conversion apparatuses and the electro-optical signal conversion apparatus. The N digital-to-analog conversion apparatuses are further connected to the nonlinear compensation apparatus. Each local oscillator is connected to a corresponding digital-to-analog conversion apparatus and a corresponding electrical domain switch. The optical splitter is separately connected to the electro-optical signal conversion apparatus and the optical-electro signal conversion apparatus. The analog-to-digital conversion apparatus is separately connected to the optical-electro signal conversion apparatus, the N electrical domain switches, and the nonlinear compensation apparatus.

Optionally, in this manner, correspondingly the first processing module further includes N first frequency mixers and N bandpass filters. One digital-to-analog conversion apparatus corresponds to one first frequency mixer, one bandpass filter, and one local oscillator. The second processing apparatus further includes a second frequency mixer and a low-pass filter. Optionally, the first processing apparatus further includes N variable attenuators and N low noise amplifiers. One bandpass filter corresponds to one variable attenuator and one low noise amplifier. Optionally, the first processing apparatus further includes an optical domain amplifier. Optionally, the second processing apparatus further includes an electrical domain amplifier. It should be understood that for a connection manner of the components in this manner, refer to the following Embodiment 5.

When N is greater than 1, the structure of the communication device in the foregoing two possible implementations is applicable to compensation for nonlinear distortion of the single-wavelength and multi-frequency signal. A structure of the communication device in the following two possible implementations is applicable to compensation for nonlinear distortion of a multi-wavelength and multi-frequency signal.

In a possible implementation, the communication device further includes a wavelength division multiplexer and a wavelength division demultiplexer. The wavelength division multiplexer is separately connected to the first processing apparatus and the optical splitter. The wavelength division demultiplexer is separately connected to the optical splitter and the second processing apparatus. The first processing apparatus is specifically configured to convert the first baseband subsignals into the first radio frequency subsignals, and convert the first radio frequency subsignals into N first optical subsignals. The optical signal includes the N first optical subsignals. The wavelength division multiplexer is configured to combine the N first optical subsignals, and output a combined optical signal to the optical splitter. The wavelength division demultiplexer is configured to split the second optical signal into N second optical subsignals. The second processing apparatus is specifically configured to convert the second optical subsignals into the second radio frequency subsignals, and convert the second radio frequency subsignals into the N second baseband subsignals. In this manner, the first processing module includes N digital-to-analog conversion apparatuses and N electro-optical signal conversion apparatuses. One digital-to-analog conversion apparatus corresponds to one electro-optical signal conversion apparatus. The second processing apparatus includes N optical-electro signal conversion apparatuses and N analog-to-digital conversion apparatuses. One optical-electro signal conversion apparatus corresponds to one analog-to-digital conversion apparatus. There are N local oscillators. One local oscillator corresponds to one digital-to-analog conversion apparatus and one analog-to-digital conversion apparatus. The nonlinear compensation apparatus is connected to the N digital-to-analog conversion apparatuses. Each digital-to-analog conversion apparatus is connected to a corresponding electro-optical signal conversion apparatus and a corresponding local oscillator. The wavelength division multiplexer is separately connected to the N electro-optical signal conversion apparatuses and the optical splitter. The wavelength division demultiplexer is separately connected to the N optical-electro signal conversion apparatuses and the optical splitter. Each analog-to-digital conversion apparatus is further connected to a corresponding optical-electro signal conversion apparatus and a corresponding local oscillator. The N analog-to-digital conversion apparatuses are all connected to the nonlinear compensation apparatus.

Optionally, in this manner, correspondingly the first processing module further includes N first frequency mixers and N bandpass filters. The second processing apparatus further includes N second frequency mixers and N low-pass filters. Optionally, the first processing apparatus further includes N variable attenuators and N low noise amplifiers. Optionally, the first processing apparatus further includes an optical domain amplifier. Optionally, the second processing apparatus further includes an electrical domain amplifier. It should be understood that for a connection manner of the components in this manner, refer to the following Embodiment 6.

In a possible implementation, the communication device further includes a wavelength division multiplexer and a wavelength division demultiplexer. For a connection manner and a function of the wavelength division multiplexer and the wavelength division demultiplexer, refer to the descriptions in the foregoing possible implementations. In view of this, the communication device in this manner further includes 2N electrical domain switches. The local oscillator is connected to N electrical domain switches. The N electrical domain switches are further connected to the second processing apparatus. One electrical domain switch corresponds to one first radio frequency subsignal. The second processing apparatus is further connected to remaining N electrical domain switches. One electrical domain switch corresponds to one second radio frequency subsignal. One first radio frequency subsignal corresponds to one second radio frequency subsignal. The electrical domain switch is configured to control connection and disconnection of a feedback link of a second radio frequency subsignal corresponding to a first radio frequency subsignal. The second processing apparatus is further specifically configured to convert a fed-back second radio frequency subsignal into a second baseband subsignal. In this manner, the electrical domain switch may be controlled to feed back a second baseband subsignal at a specific frequency and perform nonlinear compensation on the signal at such frequency.

In this manner, the first processing module includes N digital-to-analog conversion apparatuses and N electro-optical signal conversion apparatuses. One digital-to-analog conversion apparatus corresponds to one electro-optical signal conversion apparatus. The second processing apparatus includes N optical-electro signal conversion apparatuses and an analog-to-digital conversion apparatus. One optical-electro signal conversion apparatus corresponds to one electrical domain switch. There are N local oscillators. One local oscillator corresponds to one digital-to-analog conversion apparatus, one electrical domain switch, and one analog-to-digital conversion apparatus. The nonlinear compensation apparatus is connected to the N digital-to-analog conversion apparatuses. Each digital-to-analog conversion apparatus is connected to a corresponding electro-optical signal conversion apparatus and a corresponding local oscillator. Each local oscillator is further connected to a corresponding electrical domain switch. The wavelength division multiplexer is separately connected to the N electro-optical signal conversion apparatuses and the optical splitter. The wavelength division demultiplexer is separately connected to the N optical-electro signal conversion apparatuses and the optical splitter. Each optical-electro signal conversion apparatus is connected to a corresponding electrical domain switch. The 2N electrical domain switches are all connected to the analog-to-digital conversion apparatus. The analog-to-digital conversion apparatus is further connected to the nonlinear compensation apparatus. Optionally, in this manner, correspondingly the first processing module further includes N first frequency mixers and N bandpass filters. The second processing apparatus further includes a second frequency mixer and a low-pass filter. Optionally, the first processing apparatus further includes N variable attenuators and N low noise amplifiers. Optionally, the first processing apparatus further includes an optical domain amplifier. Optionally, the second processing apparatus further includes an electrical domain amplifier. It should be understood that for a connection manner of the components in this manner, refer to the following Embodiment 7.

It should be understood that, based on the structure of the communication device provided in this embodiment of this application when N is greater than 1, the following describes a compensation manner of the nonlinear compensation apparatus when the electro-optical signal conversion apparatus is an EML or a DML. It should be understood that the nonlinear compensation apparatus in this embodiment includes a digital pre-distortion module and a parameter estimation module.

Manner 1: The electro-optical signal conversion apparatus is an external modulator laser or a direct modulator laser.

The digital pre-distortion module is configured to perform pre-distortion processing on the first baseband subsignals based on a distortion parameter. The parameter estimation module is configured to update the distortion parameter based on the first baseband subsignals and the second baseband subsignals to perform nonlinear compensation on the first baseband subsignals. It should be understood that the nonlinear compensation manner used in the first manner is a multi-dimensional DPD nonlinear compensation manner. A multi-dimensional DPD model is not limited to a polynomial model and a neural network model. The manner of performing compensation by using the multi-dimensional DPD model can compensate for nonlinear distortion of a single baseband signal in a transmission process, and can also compensate for nonlinear distortion caused by inter-modulation and crosstalk between a plurality of baseband signals.

Manner 2: The electro-optical signal conversion apparatus is an external modulator laser.

The digital pre-distortion module is configured to perform pre-distortion processing on the first baseband subsignals based on a distortion parameter. The parameter estimation module is configured to: obtain a difference between a preset bias voltage and a half-wave voltage of the external modulator laser based on the first baseband subsignals and the second baseband subsignals; and update the distortion parameter based on the difference to perform nonlinear compensation on the first baseband subsignals. It should be understood that, in this manner, for a manner of performing nonlinear compensation on the first baseband subsignals, refer to related descriptions of performing nonlinear compensation on the first baseband signal in the foregoing manner.

Other effects of the foregoing optional manners in the first aspect are described below with reference to specific embodiments.

According to a second aspect, an embodiment of this application provides a communication system, including the communication device according to the first aspect and a remote-side communication device. The communication device according to the first aspect is a central-side communication device in a remote communication system. It should be understood that, in addition, the remote-side communication device is configured to convert a first optical signal from the central-side communication device into a radio frequency signal, and transmit the radio frequency signal through an antenna.

Embodiments of this application provide a communication device and system. The communication device is a central-side communication device. In embodiments of this application, a feedback link is established in the central-side communication device. The feedback link is used to feed back a baseband signal that has nonlinear distortion and that is processed by a component in the central-side communication device. The central-side communication device may compensate for nonlinear distortion of the baseband signal based on a generated baseband signal and the signal fed back through the feedback link. This improves signal transmission quality. Nonlinear distortion in a RoF network system mainly occurs in the central-side communication device. Therefore, in a structure of the central-side communication device in embodiments of this application, nonlinear distortion in the RoF network system can be compensated for, an additional optical fiber does not need to be disposed, and complex control logic can be avoided when the feedback link needs to be established between the central-side communication device and a remote-side communication device. This simplifies a disposing manner on a remote side.

**BRIEF DESCRIPTION OF DRAWINGS**

FIG. 1 is a schematic diagram of a structure of a remote network system for transmitting a signal through a coaxial cable in a conventional technology;
FIG. 2 is a schematic diagram of a structure of a CPRI network system in the conventional technology;
FIG. 3 is a schematic diagram of a structure of a radio over fiber network system in the conventional technology;
FIG. 4 is a first schematic diagram of a structure of an electro-optical signal conversion apparatus in a RoF network system provided in the conventional technology;
FIG. 5 is a second schematic diagram of a structure of an electro-optical signal conversion apparatus in a RoF network system provided in the conventional technology;
FIG. 6 is a third schematic diagram of a structure of an electro-optical signal conversion apparatus in a RoF network system provided in the conventional technology;

FIG. 7 is a schematic diagram of a structure of a RoF network system provided in the conventional technology;

FIG. 8 is a schematic diagram of an architecture of a RoF network system according to an embodiment of this application;

FIG. 9 is a schematic diagram of a structure of a RoF network system according to an embodiment of this application;

FIG. 10 is a schematic diagram of a structure of a RoF network system according to another embodiment of this application;

FIG. 11 is a schematic diagram of one-dimensional DPD nonlinear compensation according to an embodiment of this application;

FIG. 12 is a schematic diagram of a structure of a RoF network system according to another embodiment of this application;

FIG. 13 is a schematic diagram of nonlinear compensation of an EML according to an embodiment of this application;

FIG. 14 is a schematic diagram of a structure of a RoF network system according to another embodiment of this application;

FIG. 15 is a schematic diagram of a structure of a RoF network system according to another embodiment of this application;

FIG. 16 is a schematic diagram of multi-dimensional DPD nonlinear compensation according to an embodiment of this application;

FIG. 17 is a schematic diagram of representation of inter-modulation and crosstalk between multi-frequency baseband signals according to an embodiment of this application;

FIG. 18 is a schematic diagram of a structure of a RoF network system according to another embodiment of this application;

FIG. 19 is a schematic diagram of a structure of a RoF network system according to another embodiment of this application;

FIG. 20 is a schematic diagram of a structure of a RoF network system according to another embodiment of this application;

FIG. 21 is a schematic diagram of a structure of a RoF network system according to another embodiment of this application;

FIG. 22 is a schematic diagram of a structure of a RoF network system according to another embodiment of this application; and

FIG. 23 is a schematic diagram of a structure of a RoF network system according to another embodiment of this application.

Description of reference numerals:

10: Central-side communication device;
20: Remote-side communication device;
11: Digital processing apparatus;
12: First processing apparatus;
13: Optical splitter;
14: Second processing apparatus;
15: Local oscillator;
16: Electrical domain combiner;
17: Electrical domain splitter;
18: Electrical domain switch;
19: Wavelength division multiplexer;
19': Wavelength division demultiplexer;
111: Baseband resource pool;
112: Nonlinear compensation apparatus;
1121: Digital pre-distortion module;
1122: Parameter estimation module;
121: Digital-to-analog conversion apparatus;
122: First frequency mixer;
123: Bandpass filter;
124: Electro-optical signal conversion apparatus;
125: Variable attenuator;
126: Low noise amplifier;
127: Optical domain amplifier;
141: Optical-electro signal conversion apparatus;

142: Second frequency mixer;

143: Low-pass filter;

144: Analog-to-digital conversion apparatus;

145: Electrical domain amplifier;

21: Third processing apparatus; and

22: Antenna.

## DESCRIPTION OF EMBODIMENTS

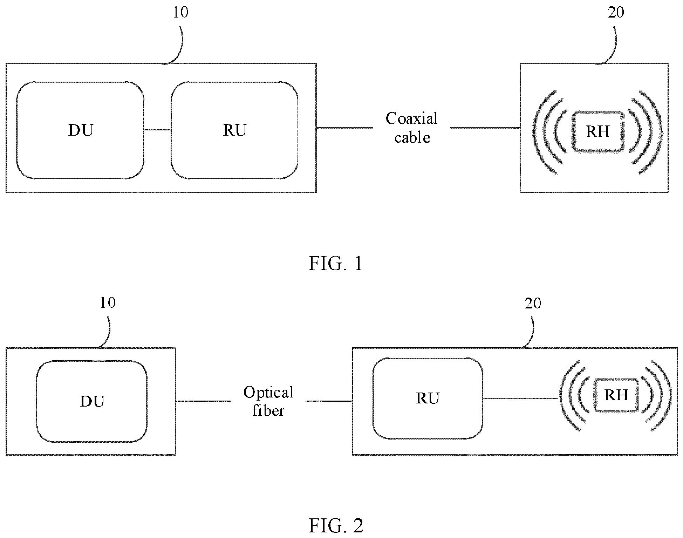

A remote network system includes a central-side communication device and at least one remote-side communication device. The central-side communication device generates a baseband signal, and the remote-side communication device transmits a radio frequency signal converted from the baseband signal, for access and use by a user terminal. FIG. 1 is a schematic diagram of a structure of a remote network system for transmitting a signal through a coaxial cable in a conventional technology. As shown in FIG. 1, in the remote network system, a central-side communication device 10 and a remote-side communication device are connected through the coaxial cable. The central-side communication device 10 includes a baseband signal processing unit (digital unit, DU) and a radio frequency signal processing unit (radio unit, RU). The remote-side communication device 20 includes a radio frequency signal transmitting unit. The radio frequency signal transmitting unit is, for example, a radio head (radio head, RH).

The central-side communication device 10 generates a baseband signal, converts the baseband signal into a radio frequency signal through the DU and the RU, and further transmits the radio frequency signal to the remote-side communication device 20 through the coaxial cable. The remote-side communication device 20 may transmit the received radio frequency signal through the RH. In a digital CPRI remote network, a radio frequency signal is transmitted through a coaxial cable, resulting in a low transmission rate.

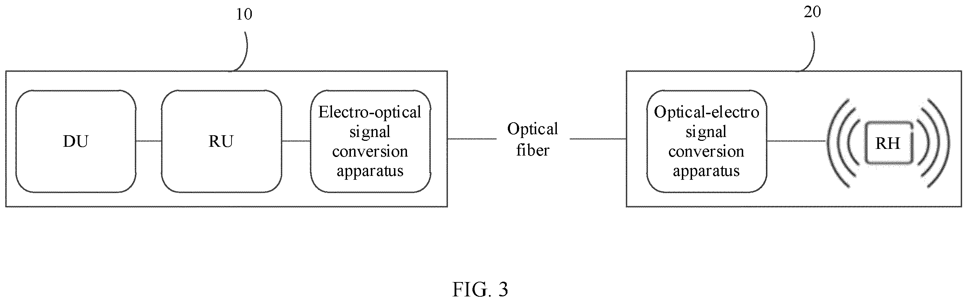

FIG. 2 is a schematic diagram of a structure of a CPRI network system in the conventional technology. As shown in FIG. 2, in a digital common public radio interface (common public radio interface, CPRI) remote network system and an enhanced-CPRI (enhanced-CPRI, eCPRI) remote network system, a central-side communication device 10 and a remote-side communication device 20 are connected through an optical fiber. The central-side communication device 10 includes a DU, and the remote-side communication device 20 includes an RU and an RH. After generating a baseband signal, the central-side communication device 10 transmits the baseband signal to the remote-side communication device 20 through the optical fiber. The remote-side communication device 20 may convert the baseband signal into a radio frequency signal through the RU, and transmit the radio frequency signal through the RH. Although the optical fiber for transmitting the baseband signal in the CPRI network system and the eCPRI network system has a transmission rate higher than that of the coaxial cable for signal transmission, the signal transmission rate is still lower than that of a radio over fiber network system in FIG. 3.

FIG. 3 is a schematic diagram of a structure of a radio over fiber network system in the conventional technology. As shown in FIG. 3, in a radio over fiber (radio over fiber, RoF) remote network system, a central-side communication device 10 includes a DU, an RU, and an electro-optical signal conversion apparatus, and a remote-side communication device 20 includes an optical-electro signal conversion apparatus and an RH. The central-side communication device converts a generated baseband signal into a radio frequency signal, converts the radio frequency signal into an optical signal by using the electro-optical signal conversion apparatus, and then transmits the optical signal to the remote-side communication device through an optical fiber. The remote-side communication device converts the received optical signal into a radio frequency signal by using the optical-electro signal conversion apparatus, and further transmits the radio frequency signal through the RH.

The RoF network system simplifies a manner of disposing the remote-side communication device. A plurality of components such as the DU, the RU, and the electro-optical signal conversion apparatus are disposed in the central-side communication device, so that costs of the remote-side communication device can be effectively reduced, and it is convenient to quickly deploy the remote-side communication device, to improve network coverage. In the RoF network system, the radio frequency signal needs to be converted into the optical signal by using the electro-optical signal conversion apparatus. However, the electro-optical signal conversion apparatus is prone to generating nonlinear distortion in a signal conversion process, and dispersion also causes nonlinear distortion of the optical signal in a transmission process of the optical signal. Consequently, the optical signal transmitted in the RoF network system has nonlinear distortion. This results in low quality of the optical signal.

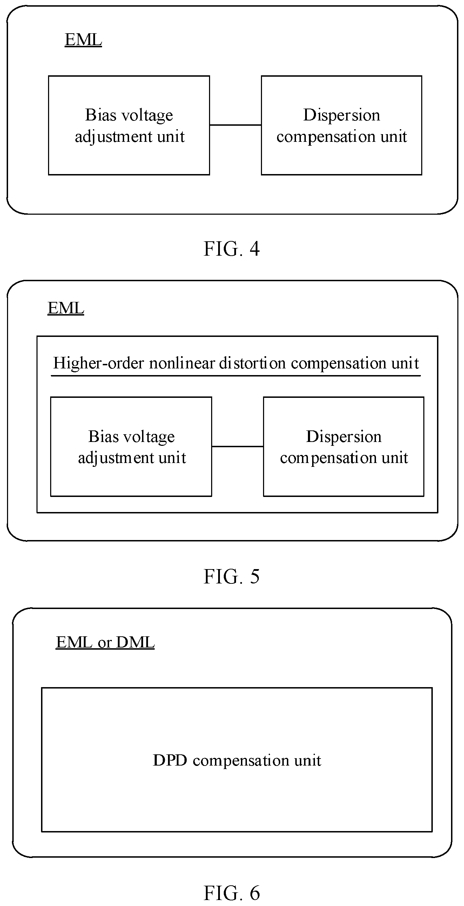

FIG. 4 is a first schematic diagram of a structure of an electro-optical signal conversion apparatus in a RoF network system provided in the conventional technology. As shown in FIG. 4, the electro-optical signal conversion apparatus in a structure of the RoF network system is an external modulator laser (external modulator laser, EML). The EML may include a bias voltage adjustment unit and a dispersion compensation unit. Nonlinear distortion generated by the electro-optical signal conversion apparatus in the signal conversion process may cause a change in a bias voltage of the electro-optical signal conversion apparatus. Therefore, in FIG. 4, the bias voltage adjustment unit may be used to adjust the bias voltage of the electro-optical signal conversion apparatus, to eliminate nonlinear distortion generated by the electro-optical signal conversion apparatus in the signal conversion process. In addition, the dispersion compensation unit may further perform nonlinear compensation on nonlinear distortion caused by dispersion of the optical signal, to eliminate nonlinear distortion caused by transmission of the optical signal.

However, the compensation method in FIG. 4 only considers nonlinear compensation performed when the electro-optical signal conversion apparatus is an EML. The compensation method is not applicable to a scenario in which the electro-optical signal conversion apparatus is a direct modulator laser (direct modulator laser, DML), and applicability is limited. In addition, compensation effect of the dispersion compensation unit in this compensation manner on nonlinear distortion is related to a wavelength of an optical signal and a length of an optical fiber, and robustness of the compensation effect is poor and costs are high. In addition, this compensation manner does not consider linear distortion caused by a memory characteristic of the EML. It should be understood that the memory characteristic is a characteristic that a signal transmitted at a previous moment in a signal transmission process affects a subsequently transmitted signal, and this characteristic is an inherent characteristic related to a component.

Nonlinear distortion may include lower-order nonlinear distortion and higher-order nonlinear distortion. Higher-order nonlinear distortion has greater impact on quality of an optical signal. Therefore, based on FIG. 4, to further improve compensation effect on negative nonlinear distortion, FIG. 5 provides a higher-order nonlinear distortion compensation method. FIG. 5 is a second schematic diagram of a structure of an electro-optical signal conversion apparatus in a RoF network system provided in the conventional technology. As shown in FIG. 5, the electro-optical signal conversion apparatus in the RoF network system structure is an external modulator laser EML. The EML may include a higher-order nonlinear distortion compensation unit. The higher-order nonlinear distortion compensation unit includes a bias voltage adjustment unit and a dispersion compensation unit. Different from FIG. 4, the dispersion compensation unit compensates for second-order nonlinear distortion, and the bias voltage adjustment unit compensates for third-order or higher-order nonlinear distortion. Therefore, compensation effect of the nonlinear compensation method in FIG. 5 is more obvious. However, the method in FIG. 5 still has the same problem as that in FIG. 4.

To resolve the foregoing problem in the nonlinear compensation methods in FIG. 4 and FIG. 5, FIG. 6 provides a memory polynomial-based digital pre-distortion (digital pre-distortion, DPD) nonlinear compensation method. FIG. 6 is a third schematic diagram of a structure of an electro-optical signal conversion apparatus in a RoF network system provided in the conventional technology. As shown in FIG. 6, the electro-optical signal conversion apparatus in a structure of the RoF network system may be an EML or a DML. The electro-optical signal conversion apparatus includes a DPD compensation unit. The DPD compensation unit performs, based on a signal input to the electro-optical signal conversion apparatus and a signal output by the electro-optical signal conversion apparatus, nonlinear compensation on nonlinear distortion generated by the electro-optical signal conversion apparatus in a signal conversion process.

Because the DPD nonlinear compensation method may be applicable to the EML or the DML and further considers nonlinear distortion caused by a memory characteristic of the electro-optical signal conversion apparatus, nonlinear compensation effect can be improved. However, the nonlinear compensation method in FIG. 6 is applicable only to the electro-optical signal conversion apparatus and does not consider nonlinear distortion caused by another component, for example, a power amplifier (power amplifier, PA), generally included in the RoF network system. Therefore, the RoF network system further has nonlinear distortion. It should be noted that for the DPD nonlinear compensation method, refer to related descriptions of a DPD nonlinear compensation method in the following embodiments of this application.

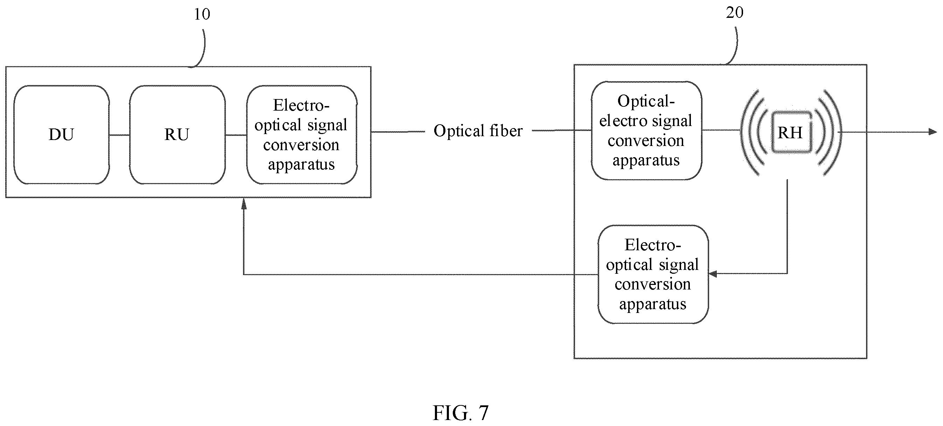

To further resolve the foregoing technical problem in FIG. 6, FIG. 7 provides a memory polynomial-based digital pre-distortion (digital pre-distortion, DPD) nonlinear compensation method. FIG. 7 is a schematic diagram of a structure of a RoF network system provided in the conventional technology. As shown in FIG. 7, the RoF network system also includes a central-side communication device 10 and a remote-side communication device 20. For a specific manner of disposing components in the central-side communication device 10 and the remote-side communication device 20, refer to FIG. 3.

Different from FIG. 3, the remote-side communication device 20 in FIG. 7 further includes a radio frequency signal division apparatus, and the RoF network system further includes a feedback link. The radio frequency signal division apparatus transmits a part of radio frequency signals that are from an optical-electro signal conversion apparatus, and outputs the other part of radio frequency signals to the feedback link. On the feedback link, the remote-side communication device 20 includes an electro-optical signal conversion apparatus. The other part of radio frequency signals are converted into an optical signal by using the optical-electro signal conversion apparatus and then fed back to the central-side communication device. After converting the fed-back optical signal into a baseband signal, the central-side communication device 10 compares the baseband signal with a baseband signal output by the central-side communication device and performs analysis to determine nonlinear distortion of the baseband signal, and further adjusts a parameter of the baseband signal to compensate for nonlinear distortion in a signal conversion process.

Although the method shown in FIG. 7 can compensate for nonlinear distortion caused by other components disposed in the RoF network system, because the remote-side communication device needs to feed back the optical signal in the method shown in FIG. 7, an additional optical fiber needs to be disposed between the central-side communication device and the remote-side communication device to establish the feedback link. In the conventional technology, to avoid disposing the additional optical fiber to transmit the optical signal fed back by the remote-side communication device, the optical signal and the uplink data may share a same link (for example, the optical fiber connecting the electro-optical signal conversion apparatus and the optical-electro signal conversion apparatus in FIG. 7). However, in this manner, additional control logic needs to be configured on the central-side communication device and the remote-side communication device, to implement switching between the uplink data and the fed-back optical signal by the central-side communication device. This results in high complexity.

The existing RoF network system simplifies a manner of disposing the remote-side communication device. A plurality of components such as a DU, an RU, and the electro-optical signal conversion apparatus are integrated into the central-side communication device. Therefore, nonlinear distortion in the RoF network system mainly occurs in the central-side communication device. Therefore, to resolve the foregoing technical problem, the feedback link is established in the central-side communication device in this embodiment of this application, so that nonlinear distortion in the RoF network system can be compensated for, the additional optical fiber does not need to be disposed, and complex control logic can be avoided when the feedback link needs to be established between the central-side communication device and the remote-side communication device. This simplifies a disposing manner on a remote side.

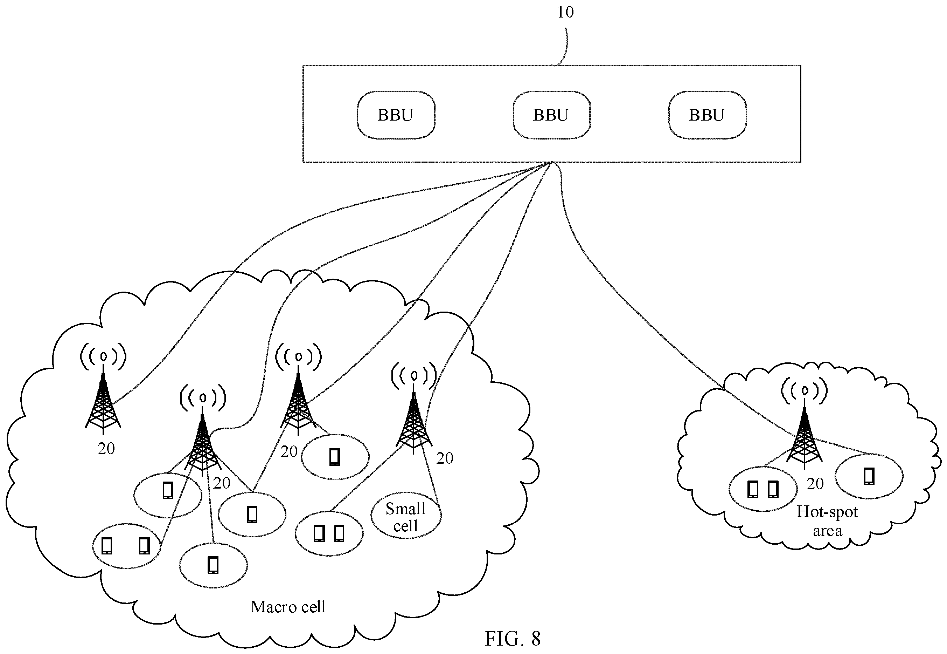

FIG. 8 is a schematic diagram of an architecture of a RoF network system according to an embodiment of this application. As shown in FIG. 8, the RoF network system includes a central-side communication device 10 and a plurality of remote-side communication devices 20. The central-side communication device 10 and the plurality of remote-side communication devices 20 are connected through an optical fiber. The in-between optical fiber may be 5 km to 50 km.

The central-side communication device in FIG. 8 includes at least one analog baseband unit (baseband unit, BBU), and each remote-side communication device includes a remote radio unit (remote radio unit, RRU). The RoF network system in this embodiment of this application is applicable to scenarios such as a macro cell (macro cell) and a small cell, for example, a millimeter-wave small cell (Millimeter-wave small cell, mmWave small cell) and a hot-spot area (hot-spot area). The remote-side communication device may be a base station. The base station may be a base transceiver station (Base Transceiver Station, BTS for short) in a GSM system or a CDMA system, or may be a base station (NodeB, NB for short) in a WCDMA system, or may be an evolved NodeB (evolved NodeB, eNB for short) or a next-generation base station (which may be collectively referred to as a next-generation radio access network node (NG-RAN node) in an LTE system. The next-generation base station includes a new radio base station (NR nodeB, gNB) and a next-generation evolved base station (NG-eNB). This is not limited herein.

The following describes a structure of the central-side communication device in embodiments of this application with reference to specific embodiments. The following several embodiments may be combined with each other, and structures of the central-side communication device disclosed in the several embodiments may be mutually referenced. Solutions obtained by combining components in the following embodiments or adjusting component positions all fall within the protection scope of embodiments of this application. Same or similar concepts or processes may not be described again in some embodiments.

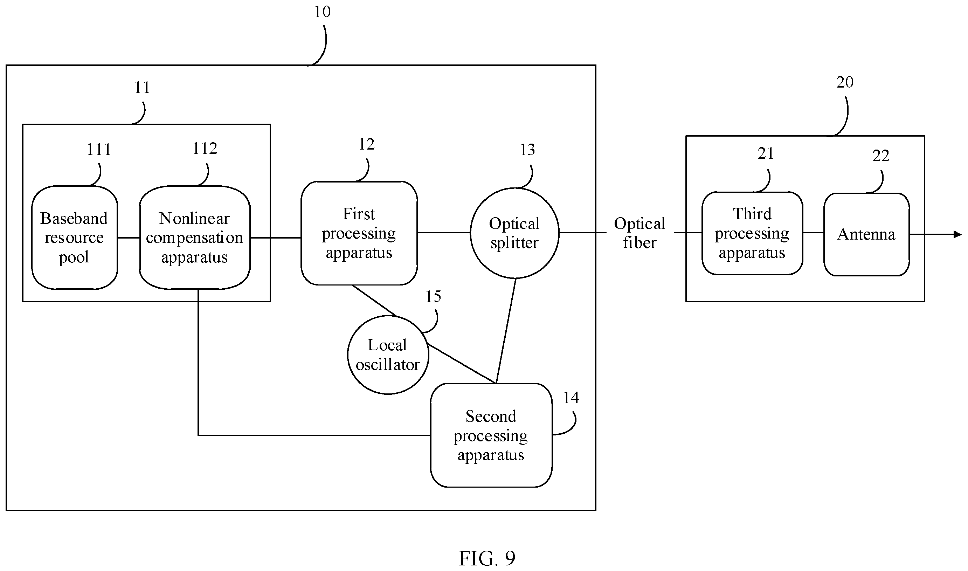

FIG. 9 is a schematic diagram of a structure of a RoF network system according to an embodiment of this application. As shown in FIG. 9, the RoF network system in this embodiment of this application includes a central-side communication device 10 and at least one remote-side communication device. It should be understood that FIG. 9 describes an example of one remote-side communication device.

**Embodiment 1**

In this embodiment of this application, the central-side communication device 10 includes a digital processing apparatus 11, a first processing apparatus 12, an optical splitter 13, a second processing apparatus 14, and a local oscillator 15. The first processing apparatus 12 is separately connected to the digital processing apparatus 11, the local oscillator 15, and the optical splitter 13. The optical splitter 13 is further connected to the second processing apparatus 14. The second processing apparatus 14 is further connected to the local oscillator 15 and the digital processing apparatus 11.

The digital processing apparatus 11 is configured to generate a first baseband signal, and output the first baseband signal to the first processing apparatus 12. Optionally, the digital processing apparatus 11 in this embodiment of this application may generate a baseband signal source, for example, a baseband resource pool.

The first processing apparatus 12 is configured to convert the first baseband signal into a first radio frequency signal, convert the first radio frequency signal into an optical signal, and output the optical signal to the optical splitter 13. It should be understood that the local oscillator 15 in this embodiment of this application is configured to generate a radio frequency signal. It should be understood that the first baseband signal in this embodiment of this application may be a digital baseband signal. The first processing apparatus 12 may convert the first baseband signal into the first radio frequency signal through the local oscillator 15, and convert the first radio frequency signal into the optical signal. The first processing apparatus 12 may convert the first baseband signal into the first radio frequency signal at a specific frequency through the local oscillator 15.

After the optical splitter 13 receives the optical signal from the first processing apparatus 12, the optical splitter 13 is configured to split the optical signal into a first optical signal and a second optical signal, output the first optical signal to at least one remote-side communication device, and output the second optical signal to the second processing apparatus 14. It should be noted that the first optical signal and the second optical signal in this embodiment of this application have a same wavelength but different powers. For example, in this embodiment, the optical signal is split into the first optical signal and the second optical signal at a power ratio of 9:1, where a power percentage of the first optical signal is 90%, and a power percentage of the second optical signal is 10%.

In a remote network system in a conventional technology, for example, a CPRI/eCPRI network system, after converting a digital baseband signal into an analog baseband signal, the central-side communication device 10 transmits the analog baseband signal to the remote-side communication device 20 through an optical fiber, where the analog baseband signal is transmitted through the optical fiber. However, the central-side communication device 10 in this embodiment of this application may convert a digital baseband signal into a radio frequency signal, convert the radio frequency signal into an optical signal, and transmit the optical signal to the remote-side communication device 20 through an optical fiber.

In this embodiment of this application, the central-side communication device 10 may transmit a radio frequency signal. However, in the conventional technology, the central-side communication device 10 transmits the baseband signal. The baseband signal is a signal whose center frequency is 0 Hz, but the radio frequency signal may correspond to different frequencies. Therefore, the network system in this embodiment of this application may transmit a multi-frequency signal. However, the CPRI/eCPRI network system may only transmit a single-frequency signal.

In a scenario of a plurality of communication standards, a signal has different frequencies under different communication standards. For example, the communication standard may be a communication standard such as a long term evolution (long term evolution, LTE) communication standard, a universal mobile telecommunications system (universal mobile telecommunications system, UMTS) communication standard, a wireless-fidelity (wireless-fidelity, Wi-Fi) communication standard, or a millimeter-wave communication standard. Therefore, the network system in this embodiment of this application may be applied to the scenario of the plurality of communication standards. However, the CPRI/eCPRI network system may be only applicable to a scenario of one communication standard.

As shown in FIG. 9, the remote-side communication device 20 may include a third processing apparatus 21 and an antenna 22. The third processing apparatus 21 may convert the first optical signal into a radio frequency signal, and output the radio frequency signal to the antenna 22. The antenna 22 transmits the radio frequency signal, for access and use by a user.

In this embodiment of this application, the second processing apparatus 14 is configured to convert the second optical signal into a second radio frequency signal, convert the second radio frequency signal into a second baseband signal, and output the second baseband signal to the digital processing apparatus 11. Corresponding to the first processing apparatus 12, the second baseband signal is a digital baseband signal. In this embodiment of this application, the second processing apparatus 14 may convert an optical signal into an electrical domain signal, convert the electrical domain signal into a second radio frequency signal through the local oscillator 15, and convert the second radio frequency signal into a second baseband signal. It should be understood that, in this embodiment of this application, the second radio frequency signal and the first radio frequency signal have a same frequency.

The digital processing apparatus 11 is further configured to perform nonlinear compensation on the first baseband signal based on the first baseband signal and the second baseband signal. The digital processing apparatus 11 may output the first baseband signal, and may further receive the second baseband signal processed by each component. Therefore, nonlinear compensation may be performed on the first baseband signal by comparing the first baseband signal with the second baseband signal and performing analysis, to eliminate nonlinear distortion of the first baseband signal. This improves quality of the first baseband signal, and correspondingly improves quality of a signal transmitted in the RoF network system.

In a possible implementation, as shown in FIG. 9, the digital processing apparatus 11 in this embodiment may include a baseband resource pool 111 and a nonlinear compensation apparatus 112. The baseband resource pool 111 is connected to the nonlinear compensation apparatus 112. The nonlinear compensation apparatus 112 is further separately connected to the first processing apparatus 12 and the second processing apparatus 14. It should be understood that an arrow in FIG. 9 may represent a signal transmission direction, or may represent a connection in the central-side communication device 10. Explanations of arrows in the following figures are the same as those in FIG. 9.

Optionally, in this embodiment of this application, the first baseband signal includes N first baseband subsignals, the second baseband signal includes N second baseband subsignals, the first radio frequency signal includes N first radio frequency subsignals, the second radio frequency signal includes N second radio frequency subsignals, the first radio frequency subsignals one-to-one correspond to the second radio frequency subsignals based on frequencies, and N is an integer greater than or equal to 1.

The baseband resource pool 111 is configured to generate the N first baseband subsignals, and output the N first baseband subsignals to the first processing apparatus 12 by using the nonlinear compensation apparatus 112.

Correspondingly, the first processing apparatus is specifically configured to convert the first baseband subsignals into the first radio frequency subsignals, convert the N first radio frequency subsignals into the optical signal. The second processing apparatus is specifically configured to convert the second optical signal into the N second radio frequency subsignals, convert the second radio frequency subsignals into the second baseband subsignals.

It should be understood that the N second radio frequency subsignals are generated after the N first baseband subsignals are processed by the first processing apparatus 12, the optical splitter 13, and the second processing apparatus 14. The first radio frequency subsignals one-to-one correspond to the second radio frequency subsignals based on frequencies. It should be understood that the first baseband subsignals converted into the first radio frequency subsignals also one-to-one correspond to the second baseband subsignals converted from the second radio frequency subsignals at a same frequency as the first radio frequency subsignals.

The nonlinear compensation apparatus 112 is configured to perform nonlinear compensation on the first baseband subsignals based on the first baseband subsignals and the second baseband subsignals corresponding to the first baseband subsignals. It should be understood that, for steps performed by the baseband resource pool 111 herein, refer to the foregoing step of generating the first baseband signal in the digital processing apparatus 11, and for steps performed by the nonlinear compensation apparatus 112, refer to the foregoing step of performing nonlinear compensation in the digital processing apparatus 11.

The baseband resource pool 111 may include N baseband resources. Each baseband resource is used to generate one first baseband subsignal. It should be noted that, in this embodiment of this application, a wavelength of the optical signal may be 1310 nm.

It should be understood that, in a transmission process of an optical signal, a dispersion characteristic of the optical signal causes nonlinear distortion, and this phenomenon is particularly serious in a transmission process of an optical signal with a 1550 nm wavelength. However, a dispersion phenomenon is not obvious in a transmission process of the optical signal with a 1310 nm wavelength. In an existing optical fiber communication system, the optical signal with a 1550 nm wavelength is frequently used. Therefore, nonlinear distortion caused by dispersion needs to be compensated for during transmission of the optical signal on such frequency band. In this embodiment of this application, for the optical signal with a 1310 nm wavelength, nonlinear distortion caused by dispersion of the optical signal in the RoF network system is low and may be ignored. Therefore, in this embodiment of this application, nonlinearity of a component in the central-side communication device may be locally compensated for to improve overall performance of the RoF network system. However, it should be noted that the technical solution in this embodiment of this application may also be applied to an optical fiber communication system for a 1550 nm wavelength and another different wavelength.

It should be noted that the foregoing optical signal is transmitted through the optical fiber.

In the RoF network system in this embodiment of this application, a feedback link is established in the central-side communication device. The feedback link is used to feed back a baseband signal that has nonlinear distortion and that is processed by a component in the central-side communication device. The central-side communication device may compensate for nonlinear distortion of the baseband signal based on a generated baseband signal and the signal fed back through the feedback link. This improves signal transmission quality. Nonlinear distortion in the RoF network system mainly occurs in the central-side communication device. Therefore, in a structure of the central-side communication device in this embodiment of this application, nonlinear distortion in the RoF network system can be compensated for, an additional optical fiber does not need to be disposed, and complex control logic can be avoided when the feedback link needs to be established between the central-side communication device and the remote-side communication device. This simplifies a disposing manner on a remote side.

Based on the foregoing embodiment, the baseband resource pool 111 may generate N first baseband subsignals at different frequencies. The following embodiments separately describes a structure of the RoF network system provided in this embodiment of this application when N is 1 and when N is greater than 1. The following Embodiment 2 and Embodiment 3 describe a structure of the RoF network system when N is 1, and Embodiment 4 to Embodiment 7 describe a structure of the RoF network system when N is greater than 1. It should be understood that a first baseband signal in the following Embodiment 2 to Embodiment 7 is a digital baseband signal.

**Embodiment 2**

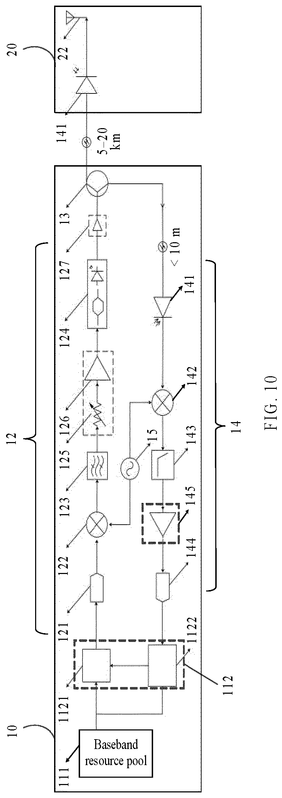

Based on the foregoing Embodiment 1, FIG. 10 is a schematic diagram of a structure of a RoF network system according to another embodiment of this application. As shown in FIG. 10, a first processing apparatus 12 in a central-side communication device 10 in this embodiment of this application may include a DAC digital-to-analog conversion apparatus 121, a first frequency mixer 122, a bandpass filter 123, and an electro-optical (electro-optical, E/O) conversion apparatus 124. A second processing apparatus 14 may include an optical-electro (optical-electro, O/E) conversion apparatus 141, a second frequency mixer 142, a low-pass filter 143, and an ADC analog-to-digital conversion apparatus 144. The structure of the RoF network system provided in Embodiment 2 is applicable to a single-wavelength and single-frequency baseband signal. The electro-optical signal conversion apparatus 124 in this embodiment of this application may be an EML or a DML. The optical-electro (optical-electro, O/E) conversion apparatus may also be referred to as a photo detector (photo detector, PD).

The digital-to-analog conversion apparatus 121 is separately connected to the nonlinear compensation apparatus 112 and the first frequency mixer 122. The bandpass filter 123 is separately connected to the first frequency mixer 122 and the electro-optical signal conversion apparatus 124. The first frequency mixer 122 is further connected to the local oscillator 15. The electro-optical signal conversion apparatus 124 is further connected to the optical splitter 13. The second frequency mixer 142 is separately connected to the optical-electro signal conversion apparatus 141, the low-pass filter 143, and the local oscillator 15. The analog-to-digital conversion apparatus 144 is separately connected to the low-pass filter 143 and the nonlinear compensation apparatus 112.

The digital-to-analog conversion apparatus 121 is configured to convert a first baseband signal into a first digital baseband signal, and output the first digital baseband signal to the first frequency mixer 122. The first frequency mixer 122 is configured to perform an up-conversion operation on the first digital baseband signal, convert the first digital baseband signal into a first radio frequency signal at a corresponding frequency through the local oscillator 15, and output the first radio frequency signal to the bandpass filter 123. The bandpass filter 123 is configured to filter the first radio frequency signal to filter out an interference signal in the first radio frequency signal, and output the filtered first radio frequency signal to the electro-optical signal conversion apparatus 124. The electro-optical signal conversion apparatus 124 is configured to convert the received first radio frequency signal into an optical signal, and output the optical signal to the optical splitter 13.

Correspondingly, the optical-electro signal conversion apparatus 141 is configured to convert a second optical signal into a second electrical domain signal, and output the second electrical domain signal to the second frequency mixer 142. The second frequency mixer 142 is configured to perform a down-conversion operation on the second electrical domain signal, convert the second electrical domain signal into a second radio frequency signal at a same frequency as the first radio frequency signal through the local oscillator 15, and output the second radio frequency signal to the low-pass filter 143. The low-pass filter 143 is configured to filter the second radio frequency signal to filter out an interference signal in the second radio frequency signal, and output the filtered second radio frequency signal to the analog-to-digital conversion apparatus 144. The analog-to-digital conversion apparatus 144 is configured to convert the second radio frequency signal into a second baseband signal, and output the second baseband signal to the nonlinear compensation apparatus 112.

In this embodiment of this application, when a power of a signal input to the second frequency mixer 142 is not greater than -20 dBm (approximately equal to 0.008 mW), and during actual measurement, a power of the signal input to the second frequency mixer 142 is -21 dBm, nonlinear compensation effect of the RoF network system is most remarkable. Similarly, when a power of a signal input to the ADC analog-to-digital conversion apparatus 144 is excessively small, nonlinearity of the RoF network system is submerged in noise, and cannot be used for a subsequent nonlinear compensation operation. During actual measurement, when the power of the signal input to the analog-to-digital conversion apparatus 144 is -6.7 dBm (approximately equal to 0.214 mW), the signal does not cause nonlinearity of the analog-to-digital conversion apparatus 144 caused by power overflow. In addition, it can be further ensured that a fed-back signal (the second baseband signal) can reflect nonlinear distortion in the RoF network system, so that a subsequent nonlinear compensation operation can be performed. Similarly, during actual measurement, when a signal-to-noise ratio of the fed-back signal is approximately 30 dB, nonlinear compensation effect of the RoF network system is most remarkable. It should be understood that the foregoing parameters are values determined after actual measurement by hardware. However, for hardware devices and algorithms of different models, the foregoing parameters may be different.

Optionally, as shown in a dashed box in FIG. 10, the first processing apparatus 12 may further include a variable attenuator 125 and a low noise amplifier 126. The variable attenuator 125 is separately connected to the bandpass filter 123 and the low noise amplifier 126. The low noise amplifier 126 is further connected to the electro-optical signal conversion apparatus 124. The variable attenuator 125 is configured to adjust a power of the first radio frequency signal. The low noise amplifier 126 is configured to reduce noise in the first radio frequency signal. Optionally, the first processing apparatus 12 may further include an optical domain amplifier 127 (erbium-doped fiber amplifier, EDFA). The optical domain amplifier 127 is separately connected to the electro-optical signal conversion apparatus 124 and the optical splitter 13. The optical domain amplifier 127 is configured to amplify a power of the optical signal. Optionally, the second processing apparatus 14 may further include an electrical domain amplifier 145. The electrical domain amplifier 145 is separately connected to the low-pass filter 143 and the analog-to-digital conversion apparatus 144. The electrical domain amplifier 145 is configured to amplify a power of the second radio frequency signal.

Optionally, the second processing apparatus 14 may further include an electrical domain amplifier 145. The electrical domain amplifier 145 is separately connected to the digital-to-analog conversion apparatus 121 and the low-pass filter 143.

Corresponding to a structure of the central-side network device in Embodiment 2, a third processing apparatus 21 in the remote-side communication device 20 may include an optical-electro signal conversion apparatus 141. The optical-electro signal conversion apparatus 141 is connected to the optical splitter 13 through an optical fiber. The optical-electro signal conversion apparatus 141 is configured to convert a first optical signal into a radio frequency signal and output the radio frequency signal to an antenna 22. The antenna 22 may output the radio frequency signal.

Based on the structure of the RoF network system shown in FIG. 10, the following describes a nonlinear distortion compensation method by the nonlinear compensation apparatus 112 in FIG. 10.

As shown in FIG. 10, the nonlinear compensation apparatus 112 may include a digital pre-distortion module 1121 and a parameter estimation module 1122. The digital pre-distortion module 1121 is separately connected to the baseband resource pool 111, the first processing apparatus 12, and the second processing apparatus 14. The digital pre-distortion module 1121 is connected to the digital-to-analog conversion apparatus 121 in the first processing apparatus 12. The parameter estimation module 1122 is separately connected to the digital pre-distortion module 1121, and the analog-to-digital conversion apparatus 144 in the second processing apparatus 14.

The digital pre-distortion module 1121 is configured to perform pre-distortion processing on the first baseband signal based on a distortion parameter. The distortion parameter may be predefined. The parameter estimation module 1122 is configured to update the distortion parameter based on the first baseband signal and the second baseband signal to perform nonlinear compensation on the first baseband signal. It should be understood that the method used in this embodiment of this application is a DPD nonlinear compensation method based on a model. The model is not limited to a polynomial model or a neural network model.

It should be understood that a DPD technology was first invented to compensate for nonlinear distortion caused by a power amplifier. Researchers then introduced this technology into a RoF network system to compensate for nonlinear distortion in the system. In the DPD technology, it is assumed that nonlinear distortion in the system may be represented by using a polynomial model, for example, a Volterra polynomial, a memory polynomial (memory polynomial, MP), a generalized memory polynomial (generalized memory polynomial, GMP), and a Wiener-Hammerstein (W-H) polynomial.

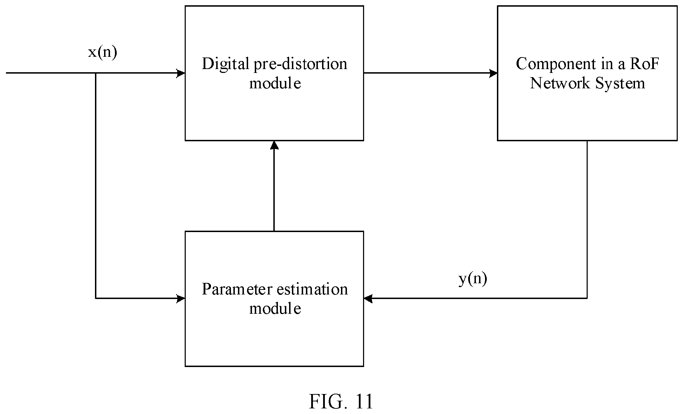

In an example of the polynomial model, FIG. 11 is a schematic diagram of one-dimensional DPD nonlinear compensation according to an embodiment of this application. As shown in FIG. 11, it is assumed that an input signal (for example, the first baseband signal) of the system is x(n), and an output signal (for example, the first baseband signal) of the system is y(n). Therefore, nonlinear distortion in the RoF network system may be represented by the following Equation 1:

$$y(n) = \sum_{k=0}^{K-1} \sum_{m=0}^{M-1} a_{km} x(n-m) \Big| x(n-m) \Big|^k \qquad \text{Equation 1}$$

Herein, $a_{km}$ indicates a parameter of a nonlinear term when nonlinear distortion in the RoF network system has an order k and a memory depth m, k is the order of nonlinear distortion in the RoF network system, and m is the memory depth of nonlinear distortion in the RoF network system.

According to the foregoing Equation 1, an inverse distortion model may be established based on the input signal and the output signal, as shown in the following Equation 2:

$$x(n) = \sum_{k=0}^{K-1} \sum_{m=0}^{M-1} w_{km} y(n-m) \Big| y(n-m) \Big|^k \qquad \text{Equation 2}$$

Herein, $W_{km}$ indicates an updated distortion parameter.

It should be understood that, in this embodiment of this application, the digital pre-distortion module 1121 may perform pre-distortion processing on a first baseband signal A based on the distortion parameter $W_{km}$ in Equation 2, to obtain a pre-distorted baseband signal B, and the parameter estimation module 1122 obtains a fed-back second baseband signal C. If no nonlinear distortion exists in the RoF network system, the following Equation 3 exists:

$$C \cdot W_{km}^{-1} = A \qquad \text{Equation 3}$$

However, if nonlinear distortion actually exists in the RoF network system, Equation 3 is not satisfied. Therefore, $W_{km}$ needs to be updated, so that Equation 3 is satisfied. Therefore, in this embodiment of this application, the updated distortion parameter is obtained by solving $W_{km}$, and pre-distortion processing is performed on the first baseband signal based on the updated distortion parameter, so that a linear optical signal is obtained after the first baseband signal is processed by the first processing apparatus 12, to improve quality of the optical signal.

It should be understood that an algorithm for obtaining the updated distortion parameter in this embodiment of this application is not limited to a least square method, a least mean square method, a singular value decomposition method, or the like. In addition, in this embodiment of this application, the updated distortion parameter may be obtained in a direct learning manner or an indirect learning manner. It should be understood that direct learning and indirect learning are two common training methods in a digital pre-distortion technology. In the direct learning method, a sent signal is directly compared with a fed-back signal, and then the distortion parameter is updated. In the indirect learning method, post-compensation is performed on a fed-back signal, the fed-back signal is compared with a sent signal, and the distortion parameter is updated based on a difference between the fed-back signal and the sent signal.

It should be noted that, as shown in FIG. 10, the structure of the remote-side communication device 20 is the same as the structure in the foregoing Embodiment 1. Details are not described herein again.

According to the structure of the RoF network system provided in this embodiment of this application, nonlinear compensation can be performed on a single-wavelength and single-frequency baseband signal. For specific technical effects of establishing the feedback link in the central-side communication device, refer to related descriptions in Embodiment 1. In addition, in this embodiment of this application, the DPD nonlinear compensation method can compensate for nonlinear distortion caused by a memory characteristic of a component, and is applicable to a plurality of types of electro-optical signal conversion apparatuses. Similarly, this embodiment of this application may further include another component into which nonlinear compensation is introduced, for example, an optical domain amplifier. Because the second baseband signal is a signal processed by the another component into which nonlinear compensation is introduced, when nonlinear compensation is performed based on the first baseband signal and the second baseband signal in this embodiment of this application, the nonlinear compensation method in this embodiment of this application may further compensate for nonlinear distortion caused by the another component into which nonlinear compensation is introduced.

**Embodiment** 3

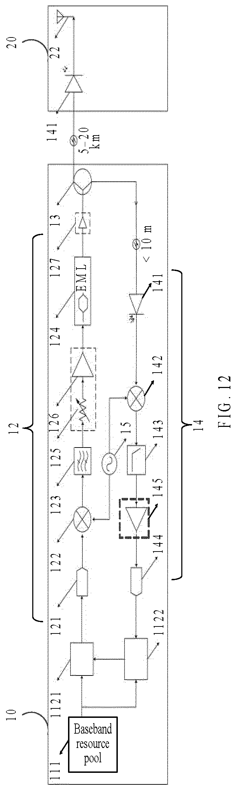

FIG. 12 is a schematic diagram of a structure of a RoF network system according to another embodiment of this application. As shown in FIG. 12, for structures and connection relationships of a first processing apparatus 12 and a second processing apparatus 14 in a central-side communication device 10 in this embodiment of this application, refer to related descriptions in the foregoing Embodiment 2. For a structure of a remote-side communication device 20, refer to related descriptions in the foregoing Embodiment 2. Details are not described herein again.

Same as the foregoing Embodiment 2, the structure of the RoF network system provided in Embodiment 3 is applicable to a single-wavelength and single-frequency baseband signal. A digital pre-distortion module 1121 is configured to perform pre-distortion processing on a first baseband signal based on a distortion parameter. Different from Embodiment 2, an electro-optical signal conversion apparatus 124 in this embodiment of this application is an EML. Correspondingly, a parameter estimation module 1122 is configured to obtain a difference between a preset bias voltage and a half-wave voltage of the external modulator laser based on the first baseband signal and a second baseband signal, and further update the distortion parameter based on the difference to perform nonlinear compensation on the first baseband signal.

The following describes a method for performing nonlinear compensation on the first baseband signal by adjusting the difference between the preset bias voltage and the half-wave voltage of the external modulator laser in this embodiment of this application.

A theoretical model of an O/E working manner in this embodiment of this application is shown in the following Equation 4:

$$P_{out} = \frac{E_{in}}{2}\left\{1 + \cos\left(\frac{\pi\left[v(t) + v_{DC}\right]}{v_\pi}\right)\right\} \qquad \text{Equation 4}$$

In addition, $v_{DC}$ in the foregoing Equation 5 satisfies the following Equation 5:

$$v_{DC} = \frac{1}{2}v_\pi + \Delta v \qquad \text{Equation 5}$$

Herein, $v_\pi$ indicates the half-wave voltage of the EML, $vDC$ indicates the preset bias voltage, $\Delta v$ indicates the difference between the half-wave voltage of the EML and the preset bias voltage, $P_{out}$ indicates a power of an optical signal output by the EML, and $v(t)$ indicates a voltage of a radio frequency signal input to the EML.

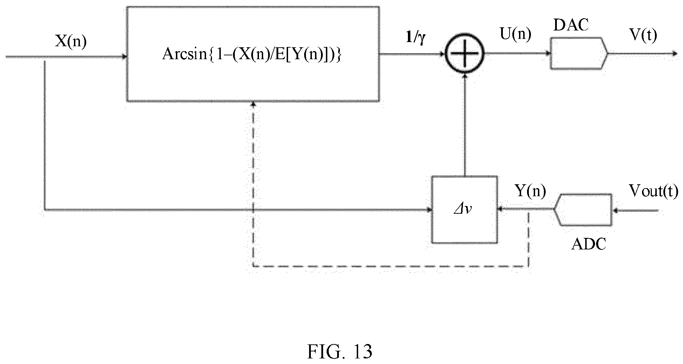

FIG. 13 is a schematic diagram of nonlinear compensation of an EML according to an embodiment of this application. As shown in FIG. 13, it is assumed that when an amplitude of a first radio frequency signal input to the EML is v(t), a second radio frequency signal output by an O/E end is $v_{out}(t)$. The following Equation 6 exists:

$$v_{out}(t) = \frac{RGE_{in}}{2\alpha}\left\{1 - \sin\left(\frac{\pi\left[v(t)+\Delta v\right]}{v_\pi}\right)\right\}$$  Equation 6

Herein, R indicates an equivalent resistance of the O/E end, G indicates a link loss between the EML and the O/E end, $E_{in}$ indicates a power of a signal input to the EML, and $\alpha$ indicates a loss of the O/E end.

When the first baseband signal is X(n), and after a second baseband signal Y(n) is obtained, the following Equation 7 is satisfied:

$$Y(n) = \frac{RGE_{in}}{2\alpha}\left\{1 - \sin\left(\frac{\pi\left[X(n)+\Delta v\right]}{v_\pi}\right)\right\}$$  Equation 7

Therefore, an expectation of Y(n) is calculated to obtain a direct current component $\frac{RGE_{in}}{2\alpha}$. The following Equation 8 may be obtained by performing fifth-order Taylor expansion on the highlight function of the foregoing Equation 8:

$$Y(n) = \frac{RGE_{in}}{2\alpha}\left\{1 - [\beta(n)] + \frac{[\beta(n)]^3}{3!} - \frac{[\beta(n)]^5}{5!} + o([\beta(n)]^7)\right\}$$

$$\beta(n) = \gamma[X(n)+\Delta v], \gamma = \frac{\pi}{v_\pi}$$  Equation 8

A value of $\Delta v$ may be obtained by solving the following Equation 9.

$$\frac{\gamma^5}{120}\Delta v^5 + \frac{\gamma^5}{24}E[X(n)]\Delta v^4 + \left\{\frac{\gamma^5}{12}E[X^2(n)] - \frac{\gamma^3}{6}\right\}\Delta v^3$$

$$+ \left\{\frac{\gamma^5}{12}E[X^3(n)] - \frac{\gamma^3}{2}E[X(n)]\right\}\Delta v^2$$

$$+ \left\{\frac{\gamma^5}{24}E[X^4(n)] - \frac{\gamma^3}{2}E[X^2(n)] + \gamma\right\}\Delta v$$

$$+ \gamma E[X(n)] - \frac{\gamma^3}{6}E[X^3(n)] + \frac{\gamma^5}{120}E[X^5(n)] = 1 - \frac{2\alpha E[Y(n)]}{RGE_{in}}$$  Equation 9

After the value of $\Delta v$ is obtained, an updated distortion parameter $U(n)$ may be obtained according to the foregoing Equation 8, as shown in the following Equation 10:

$$U(n) = \frac{1}{\gamma}\arcsin\left(1 - \frac{X(n)}{E_{in}Y(n)}\right) - \Delta v$$  Equation 10

It should be understood that E[] indicates expectation calculation (averaging).

Optionally, the parameter estimation module 1122 in this embodiment of this application stores a table of correspondences between $\Delta v$ and $U(n)$. After obtaining the difference between the half-wave voltage of the EML and the preset bias voltage, the parameter estimation module 1122 may obtain the updated distortion parameter by looking up the table, and further update the distortion parameter.

It should be noted that, as shown in FIG. 12, the structure of the remote-side communication device 20 is the same as the structure in the foregoing Embodiment 1. Details are not described herein again.

In this embodiment of this application, when the electro-optical signal conversion apparatus is the external modulator laser, a nonlinear compensation apparatus may further adjust the difference between the preset bias voltage and the half-wave voltage of the external modulator laser based on the first baseband signal and the second baseband signal to compensate for nonlinear distortion in the RoF network system.

A structure of the RoF network system provided in Embodiment 4 and Embodiment 5 is applicable to a single-wavelength and multi-frequency baseband signal. Because N is greater than 1, namely, because a baseband resource pool 111 may generate N first baseband subsignals, a first processing apparatus 12 and a second processing apparatus 14 in this embodiment of this application are different from those in Embodiment 2 and Embodiment 3. Because Embodiment 4 and Embodiment 5 include a plurality of first baseband subsignals, electrical domain signals corresponding to the plurality of first baseband subsignals may be combined in Embodiment 4 and Embodiment 5. For a specific structure of the RoF network system, refer to the following Embodiment 4 and Embodiment 5. Same components are not identified in the accompanying drawings in the following embodiments. For details, refer to the identifiers in FIG. 10.

When a carrier modulation technology, a wavelength division multiplexing (WDM) technology, a polarization multiplexing technology, and the like are introduced into the RoF network system, coexistence and co-transmission of signals (a baseband digital signal, an LTE signal, a UMTS signal, a Wi-Fi signal, a millimeter-wave signal, and the like) at different frequencies under different communication standards can be implemented, and performance of the central-side communication device 10 such as compatibility, a quantity of access users, and a throughput can be further improved. However, nonlinear distortion such as four-wave mixing and adjacent-wave crosstalk generated in a transmission process of the optical signal is also introduced. Therefore, in a structure of the RoF network system provided in the following four embodiments, nonlinear compensation may also be performed on nonlinear distortion such as four-wave mixing and adjacent-wave crosstalk. For details, refer to related descriptions in the following embodiments.

## Embodiment 4

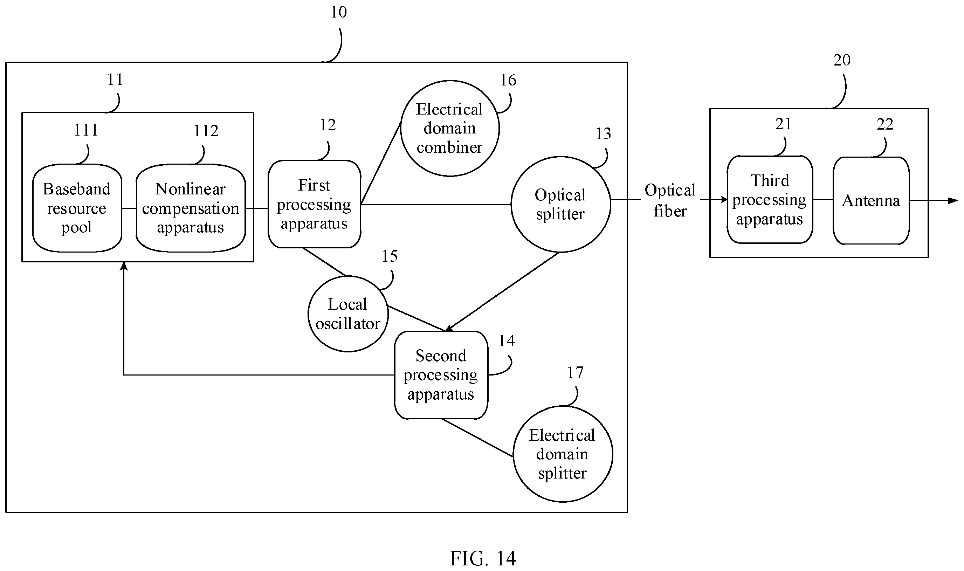

FIG. 14 is a schematic diagram of a structure of a RoF network system according to another embodiment of this application. As shown in FIG. 14, a central-side communication device 10 in this embodiment of this application may further include an electrical domain combiner 16 and an electrical domain splitter 17. The electrical domain combiner 16 is connected to a first processing apparatus 12. The electrical domain splitter 17 is connected to a second processing apparatus 14.

The first processing apparatus 12 in this embodiment of this application is specifically configured to convert first baseband subsignals into first radio frequency subsignals, and output the first radio frequency subsignals to the electrical domain combiner 16. The electrical domain combiner 16 is configured to combine the N first radio frequency subsignals, and output a combined radio frequency signal to the first processing apparatus 12. The electrical domain combiner 16 combines the N first radio frequency subsignals into one radio frequency signal. Correspondingly, the first processing apparatus 12 is further specifically configured to convert the combined radio frequency signal into an optical signal.

It should be understood that, for a manner in which the first processing apparatus 12 converts the first baseband subsignals into the first radio frequency subsignals, refer to the manner in which the first processing apparatus 12 converts the first baseband signal into the first radio frequency signal in Embodiment 1, and for a manner in which the first processing apparatus 12 converts the combined radio frequency signal into the optical signal, refer to the manner in which the first processing apparatus 12 converts the first radio frequency signal into the optical signal in Embodiment 1.

The second processing apparatus 14 in this embodiment of this application is specifically configured to convert a second optical signal into a second radio frequency signal, and output the second radio frequency signal to the electrical domain splitter 17. The electrical domain splitter 17 is configured to split the second radio frequency signal into N second radio frequency subsignals, and output the N second radio frequency subsignals to the second processing apparatus 14. It should be understood that the N second radio frequency subsignals one-to-one correspond to the N first radio frequency subsignals based on frequencies. Correspondingly, the second processing apparatus 14 is further specifically configured to convert the second radio frequency subsignals into N second baseband subsignals.

It should be understood that, in this embodiment of this application, for a manner in which the second processing apparatus 14 converts the second optical signal into the second radio frequency signal, refer to the manner in which the second processing apparatus 14 converts the optical signal into the second radio frequency signal in Embodiment 1, and for a manner in which the second processing apparatus 14 converts the second radio frequency signal into the second baseband subsignals, refer to the manner in which the second processing apparatus 14 converts the second radio frequency signal into the second baseband signal in Embodiment 1.

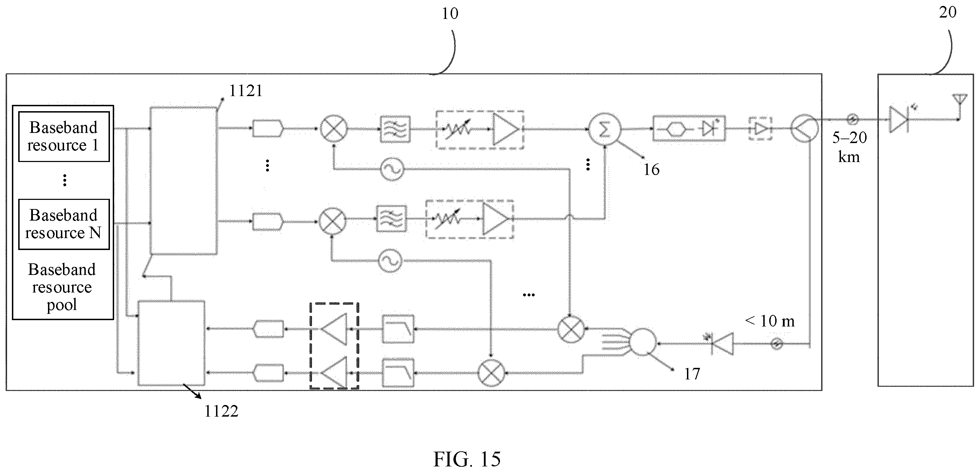

FIG. 15 is a schematic diagram of a structure of a RoF network system according to another embodiment of this application. As shown in FIG. 15, in a possible implementation, the first processing module includes an electro-optical signal conversion apparatus 124 and N digital-to-analog conversion apparatuses 121. The second processing apparatus 14 includes an optical-electro signal conversion apparatus 141 and N analog-to-digital conversion apparatuses 144. There are N local oscillators 15. One local oscillator 15 corresponds to one digital-to-analog conversion apparatus 121 and one analog-to-digital conversion apparatus 144.

The electrical domain combiner 16 is separately connected to the N digital-to-analog conversion apparatuses 121 and the electro-optical signal conversion apparatus 124. The N digital-to-analog conversion apparatuses 121 are further connected to the nonlinear compensation apparatus 112. Each local oscillator 15 is separately connected to a corresponding digital-to-analog conversion apparatus 121 and a corresponding analog-to-digital conversion apparatus 144. The optical splitter 13 is separately connected to the electro-optical signal conversion apparatus 124 and the optical-electro signal conversion apparatus 141. The electrical domain splitter 17 is separately connected to the optical-electro signal conversion apparatus 141 and the N analog-to-digital conversion apparatuses 144. The N analog-to-digital conversion apparatuses 144 are all connected to the nonlinear compensation apparatus 112.

It should be understood that the digital-to-analog conversion apparatus 121 in this embodiment of this application is configured to convert the first baseband subsignals into the first radio frequency subsignals, and output the first radio frequency subsignals to the electrical domain combiner 16. The electro-optical signal conversion apparatus 124 is configured to convert the combined radio frequency signal into the optical signal. The optical-electro signal conversion apparatus 141 is configured to convert the second optical signal into the second radio frequency signal, and output the second radio frequency signal to the electrical domain splitter 17. The analog-to-digital conversion apparatus 144 is configured to convert the second radio frequency subsignals into the second baseband subsignals.

Optionally, as shown in a dashed box in FIG. 15, the first processing apparatus 12 may further include N first frequency mixers 122 and N bandpass filters 123. One digital-to-analog conversion apparatus 121 corresponds to one first frequency mixer 122, one bandpass filter 123, and one local oscillator 15. The second processing apparatus 14 further includes N second frequency mixers 142 and N low-pass filters 143. One analog-to-digital conversion apparatus 144 corresponds to one second frequency mixer 142, one low-pass filter 143, and one local oscillator 15.

Each first frequency mixer 122 is connected to a corresponding digital-to-analog conversion apparatus 121, a corresponding bandpass filter 123, and a corresponding local oscillator 15. Each bandpass filter 123 is further connected to the electrical domain combiner 16. Each second frequency mixer 142 is connected to a corresponding low-pass filter 143, a corresponding local oscillator 15, and a corresponding electrical domain splitter 17.

Based on the foregoing structure of the central-side communication device 10, optionally, the first processing apparatus 12 further includes N variable attenuators 125 and N low noise amplifiers 126. One bandpass filter 123 corresponds to one variable attenuator 125 and one low noise amplifier 126. Each variable attenuator 125 is separately connected to a corresponding bandpass filter 123 and a corresponding low noise amplifier 126. The N low noise amplifiers 126 are further connected to the electrical domain combiner 16.

Based on the foregoing structure of the central-side communication device 10, optionally, the first processing apparatus 12 further includes an optical domain amplifier 127. The optical domain amplifier 127 is separately connected to the electro-optical signal conversion apparatus 124 and the optical splitter 13.

Based on the foregoing structure of the central-side communication device 10, optionally, the second processing apparatus 14 further includes N electrical domain amplifiers 145. One electrical domain amplifier 145 corresponds to one digital-to-analog conversion apparatus 121 and one low-pass filter 143. Each electrical domain amplifier 145 is connected to a corresponding digital-to-analog conversion apparatus 121 and a corresponding low-pass filter 143.

Based on the structure of the central-side communication device 10 provided in this embodiment of this application, the nonlinear compensation apparatus 112 in this embodiment of this application may perform nonlinear compensation on the first baseband subsignals based on the first baseband subsignals and the second baseband subsignals corresponding to the first baseband subsignals.

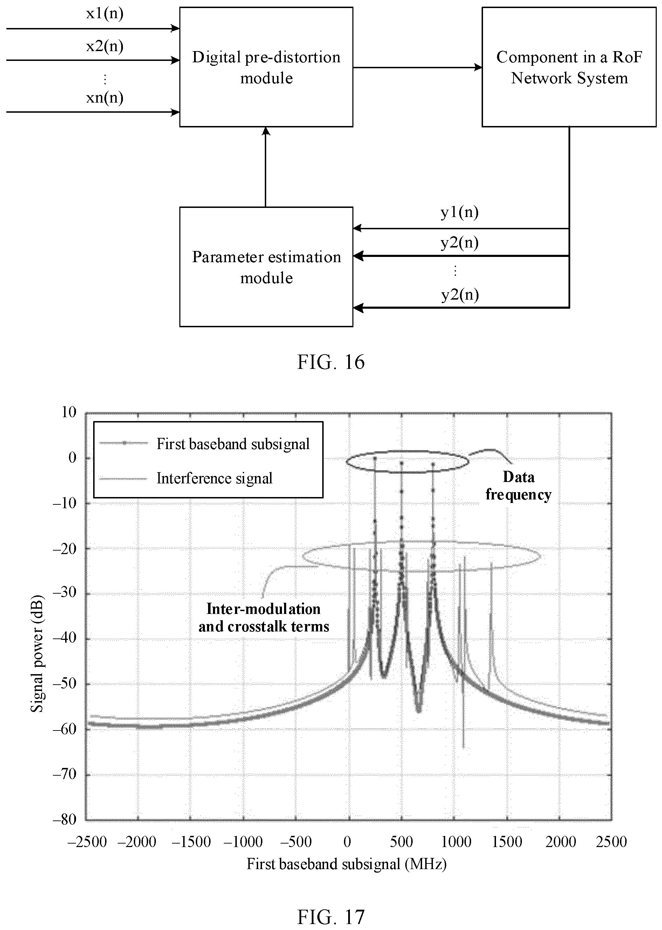

FIG. 16 is a schematic diagram of multi-dimensional DPD nonlinear compensation according to an embodiment of this application. Similar to the foregoing Embodiment 2, as shown in FIG. 16, it is assumed that an input signal of a system includes $x1(n)$, $x2(n)$, ..., and $xn(n)$, where $x1(n)$, $x2(n)$, ..., and $xn(n)$ are all first baseband subsignals, and an output signal of the system includes $y1(n)$, $y2(n)$, ..., and $yn(n)$, where $y1(n)$, $y2(n)$, ..., and $yn(n)$ are all second baseband subsignals.

Similar to the compensation method in the foregoing Embodiment 2, the DPD nonlinear compensation method may be further used in this embodiment of this application. However, different from the foregoing Embodiment 2, the first baseband signal in this embodiment of this application includes a plurality of first baseband subsignals. Therefore, a multi-dimensional model may be used to perform DPD nonlinear compensation on nonlinear distortion such as four-wave mixing and adjacent-wave crosstalk generated in a transmission process of the optical signal.

In this embodiment, the multi-dimensional model may be established first, and stored in the nonlinear compensation apparatus 112. The multi-dimensional model may be but is not limited to a polynomial model or a neural network model. The multi-dimensional model is established based on a plurality of first baseband subsignals and a plurality of fed-back second baseband subsignals. The multi-dimensional model includes an inter-modulation term of a signal included in the one-dimensional model, and also includes an inter-modulation term between a plurality of signals. FIG. 17 is a schematic diagram of representation of inter-modulation and crosstalk between multi-frequency baseband signals according to an embodiment of this application. As shown in FIG. 17, a horizontal coordinate indicates a three-frequency first baseband subsignal, and a vertical coordinate indicates a power of a signal. Center frequencies of the three-frequency first baseband subsignal are separately 200 MHz, 400 MHz, and 600 MHz. Inter-modulation and crosstalk are generated in a transmission process of the three-frequency first baseband subsignal, such as an interference signal represented by a solid line in FIG. 17.

In other words, in this scenario, the DPD nonlinear compensation method may compensate for nonlinear distortion of a single baseband signal in a transmission process, and can also compensate for nonlinear distortion caused by inter-modulation and crosstalk between a plurality of baseband signals. The one-dimensional model refers to the model used in Embodiment 2.

The nonlinear compensation apparatus 112 in this embodiment of this application includes a digital pre-distortion module 1121 and a parameter estimation module 1122. The digital pre-distortion module 1121 is configured to perform pre-distortion processing on the first baseband subsignals based on a distortion parameter. The parameter estimation module 1122 is configured to update the distortion parameter based on the first baseband subsignals, the second baseband subsignals, and the multi-dimensional model to perform nonlinear compensation on the first baseband subsignals. It should be understood that, in this embodiment of this application, the parameter estimation module 1122 may obtain an updated distortion parameter based on the N first baseband subsignals, the fed-back N second baseband subsignals, and the multi-dimensional model to perform nonlinear compensation on each first baseband subsignal, so that an optical signal obtained after the compensated first baseband subsignals are processed by the first processing apparatus 12 does not have nonlinear distortion. It should be understood that the foregoing manner of performing DPD nonlinear compensation by using the multi-dimensional model is applicable to a case in which the electro-optical signal conversion apparatus 124 is an EML or a DML.

Optionally, when the electro-optical signal conversion apparatus 124 is an EML, the compensation method in the foregoing Embodiment 3 may alternatively be used as the nonlinear compensation method performed by the nonlinear compensation apparatus 112 in this embodiment of this application. Correspondingly, the parameter estimation module 1122 is configured to obtain a difference between a preset bias voltage and a half-wave voltage of the external modulator laser corresponding to the first baseband subsignals based on the first baseband subsignals and the second baseband subsignals, and further adjusts the difference to perform nonlinear compensation on the first baseband subsignals.

It should be noted that, as shown in FIG. 15 and FIG. 16, the structure of the remote-side communication device 20 is the same as the structure in the foregoing Embodiment 1. Details are not described herein again.

According to the structure of the RoF network system provided in this embodiment of this application, a feedback link is established in the central-side communication device, so that nonlinear compensation can be performed on a single-wavelength and multi-frequency baseband signal. This can compensate for nonlinear distortion of a single baseband signal in a transmission process, and can also compensate for nonlinear distortion caused by inter-modulation and crosstalk between a plurality of baseband signals. For other technical effects in this embodiment of this application, refer to related descriptions of the technical effects in the foregoing Embodiment 2 and Embodiment 3.

## Embodiment 5

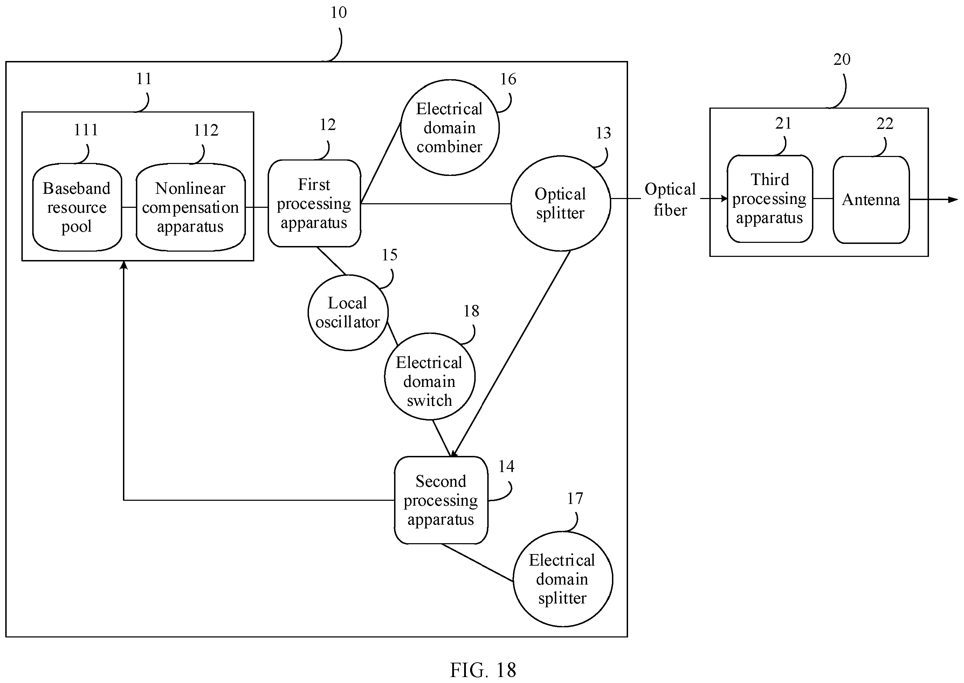

FIG. 18 is a schematic diagram of a structure of a RoF network system according to another embodiment of this application. As shown in FIG. 18, a central-side communication device 10 in this embodiment of this application may further include an electrical domain combiner 16 and N electrical domain switches 18. The electrical domain combiner 16 is connected to a first processing apparatus 12. The electrical domain switches 18 are separately connected to a local oscillator 15 and a second processing apparatus 14. One electrical domain switch 18 corresponds to one first radio frequency subsignal.

The first processing apparatus 12 in this embodiment of this application is specifically configured to convert first baseband subsignals into first radio frequency subsignals, and output the first radio frequency subsignals to the electrical domain combiner 16. The electrical domain combiner 16 is configured to combine the N first radio frequency subsignals, and output a combined radio frequency signal to the first processing apparatus 12. The electrical domain combiner 16 combines the N first radio frequency subsignals into one radio frequency signal. Correspondingly, the first processing apparatus 12 is further specifically configured to convert the combined radio frequency signal into an optical signal. It should be understood that for a manner in which the first processing apparatus 12 converts the first baseband subsignals into the first radio frequency subsignals and a manner in which the first processing apparatus 12 converts the combined radio frequency signal into the optical signal, refer to related descriptions in the foregoing Embodiment 2.

Correspondingly, the second processing apparatus 14 in this embodiment of this application is specifically configured to convert a second optical signal into a second radio frequency signal. The electrical domain switch 18 is configured to control connection and disconnection of a feedback link of a second radio frequency subsignal corresponding to a first radio frequency subsignal.

It should be noted that a possible implementation in which the electrical domain switch 18 controls connection and disconnection of the feedback link of the second radio frequency subsignal may be: The electrical domain switches 18 corresponding to the N first radio frequency subsignals may be sequentially turned on and turned off at a preset interval according to a preset rule, to control the feedback link of the second radio frequency subsignal corresponding to the electrical domain switch 18 to be connected, and feed back the second radio frequency subsignal to the nonlinear compensation apparatus 112, and after the second radio frequency subsignal is fed back to the nonlinear compensation apparatus 112, the electrical domain switch 18 may be turned off, to control the feedback link of the second radio frequency subsignal corresponding to the electrical domain switch 18 to be disconnected.

For example, the preset rule may be that the electrical domain switches 18 corresponding to a first radio frequency subsignal 1, a first radio frequency subsignal 2, ..., and a first radio frequency subsignal N are sequentially turned on at an interval of 1 ms, so that feedback links of the second radio frequency subsignal 1, the second radio frequency subsignal 2, ..., and the second radio frequency subsignal N are sequentially connected, and then the second radio frequency subsignal 1, the second radio frequency subsignal 2, ..., and the second radio frequency subsignal N are sequentially fed back to the nonlinear compensation apparatus 112.

Another possible implementation in which the electrical domain switch 18 controls connection and disconnection of the feedback link of the second radio frequency subsignal may be: The electrical domain switch 18 controls, based on a control instruction, connection and disconnection of the feedback link of the second radio frequency subsignal corresponding to the electrical domain switch 18. Optionally, the control instruction may be generated by the central-side communication device 10 based on a state of an uplink signal, or may be manually entered, to control connection and disconnection of the feedback link of the second radio frequency subsignal at a corresponding frequency.

For example, if the central-side communication device 10 determines, based on the received uplink signal, that quality of an uplink signal at a frequency is poor, the central-side communication device 10 may control an electrical domain switch corresponding to the frequency to be turned on, to feed back a second baseband subsignal at the frequency and to perform nonlinear compensation on a signal at the frequency. This improves quality of the signal at the frequency.

Another possible implementation in which the electrical domain switch 18 controls connection and disconnection of the feedback link of the second radio frequency subsignal may be: The electrical domain switch 18 controls, based on an uplink signal, connection of the feedback link of the second radio frequency subsignal corresponding to the frequency. Specifically, the central-side communication device 10 determines a frequency in a working state based on the uplink signal, and further controls the feedback link of the second radio frequency subsignal at the frequency to be connected.

For example, the central-side communication device 10 determines the frequency in the working state based on the uplink signal, and another frequency is in a non-working state (sleep state). Therefore, the central-side communication device 10 may control a feedback link of a second radio frequency subsignal corresponding to the working frequency to be connected, to perform nonlinear compensation on the signal at the frequency in the working state.

Correspondingly, the second processing apparatus 14 is further specifically configured to convert a fed-back second radio frequency subsignal into a second baseband subsignal. It should be understood that for a manner in which the second processing apparatus 14 converts the second optical signal into the second radio frequency signal and a manner in which the second processing apparatus 14 converts the fed-back second radio frequency subsignal into the second baseband subsignal, refer to related descriptions in the foregoing Embodiment 2.

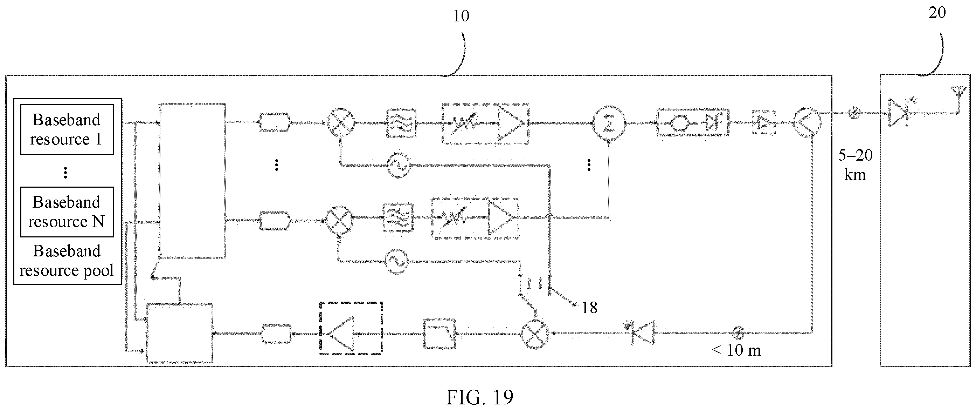

FIG. 19 is a schematic diagram of a structure of a RoF network system according to another embodiment of this application. As shown in FIG. 19, in a possible implementation, the first processing module includes an electro-optical signal conversion apparatus 124 and N digital-to-analog conversion apparatuses 121. The second processing apparatus 14 includes an optical-electro signal conversion apparatus 141 and N analog-to-digital conversion apparatuses 144. There are N local oscillators 15. One local oscillator 15 corresponds to one digital-to-analog conversion apparatus 121 and one electrical domain switch 18.

The electrical domain combiner 16 is separately connected to the N digital-to-analog conversion apparatuses 121 and the electro-optical signal conversion apparatus 124. The N digital-to-analog conversion apparatuses 121 are further connected to the nonlinear compensation apparatus 112. Each local oscillator 15 is separately connected to a corresponding digital-to-analog conversion apparatus 121 and a corresponding electrical domain switch 18. The optical splitter 13 is separately connected to the electro-optical signal conversion apparatus 124 and the optical-electro signal conversion apparatus 141. The analog-to-digital conversion apparatus 144 is separately connected to the optical-electro signal conversion apparatus 141, the N electrical domain switches 18, and the nonlinear compensation apparatus 112.

It should be understood that the digital-to-analog conversion apparatus 121 in this embodiment of this application is configured to convert the first baseband subsignals into the first radio frequency subsignals, and output the first radio frequency subsignals to the electrical domain combiner 16. The electro-optical signal conversion apparatus 124 is configured to convert the combined radio frequency signal into the optical signal. The optical-electro signal conversion apparatus 141 is configured to convert the second optical signal into the second radio frequency signal. In addition, the electrical domain switch 18 controls connection and disconnection of a feedback link of a second radio frequency subsignal in the second radio frequency signal. Correspondingly, the analog-to-digital conversion apparatus 144 is configured to convert the fed-back second radio frequency subsignal into the second baseband subsignal.

Optionally, as shown in a dashed box in FIG. 19, the first processing apparatus 12 may further include: the first processing module further includes: N first frequency mixers 122 and N bandpass filters 123. One digital-to-analog conversion apparatus 121 corresponds to one first frequency mixer 122, one bandpass filter 123, and one local oscillator 15. The second processing apparatus 14 further includes a second frequency mixer 142 and a low-pass filter 143.

A digital-to-analog conversion apparatus 121, a bandpass filter 123, and a local oscillator 15 that correspond to each first frequency mixer 122 are connected. Each local oscillator 15 is connected to a second frequency mixer 142

through a corresponding electrical domain switch 18. The second frequency mixer 142 is connected to the low-pass filter 143. The low-pass filter 143 is further connected to the analog-to-digital conversion apparatus 144. As shown in the figure, the electrical domain switches 18 are all connected to the second frequency mixer 142.

Based on the foregoing structure of the central-side communication device 10, optionally, the first processing apparatus 12 further includes N variable attenuators 125 and N low noise amplifiers 126. For descriptions of the variable attenuator 125 and the low noise amplifier 126, refer to related descriptions in the foregoing Embodiment 4. Based on the foregoing structure of the central-side communication device 10, optionally, the first processing apparatus 12 further includes an optical domain amplifier 127. For descriptions of the optical domain amplifier 127, refer to related descriptions in the foregoing Embodiment 4.

Based on the foregoing structure of the central-side communication device 10, optionally, the second processing apparatus 14 further includes an electrical domain amplifier 145. The electrical domain amplifier 145 is separately connected to the digital-to-analog conversion apparatuses 121 and the low-pass filter 143.

It should be noted that for a compensation method of the nonlinear compensation apparatus 112 in this embodiment of this application, refer to related descriptions in the foregoing Embodiment 4. Details are not described herein again.

As shown in FIG. 18 and FIG. 19, the structure of the remote-side communication device 20 is the same as the structure in the foregoing Embodiment 1. Details are not described herein again.

According to the structure of the RoF network system provided in this embodiment of this application, a feedback link is established in the central-side communication device, so that nonlinear compensation can be performed on a single-wavelength and multi-frequency baseband signal, and the electrical domain switch is disposed in the central-side communication device. Compared with the foregoing Embodiment 4, this embodiment can reduce repeated disposing of components and reduce costs. In addition, in this embodiment of this application, nonlinear compensation for a baseband signal at a specific frequency can be further implemented by controlling the electrical domain switch, and more components can be selected. For other technical effects in this embodiment of this application, refer to related descriptions of the technical effects in the foregoing Embodiment 2, Embodiment 3, and Embodiment 4.

The structures of the RoF network system provided in the foregoing Embodiment 4 and Embodiment 5 are applicable to a single-wavelength and multi-frequency baseband signal, and structures of the RoF network system provided in the following Embodiment 6 and Embodiment 7 are applicable to a multi-wavelength and multi-frequency baseband signal. Compared with the foregoing embodiments, Embodiment 6 and Embodiment 7 of a multi-wavelength baseband signal may dispose a wavelength division multiplexer 19 and a wavelength division demultiplexer 19' to combine and split a plurality of optical signals. For details about the structure, refer to the following Embodiment 6 and Embodiment 7.

**Embodiment 6**

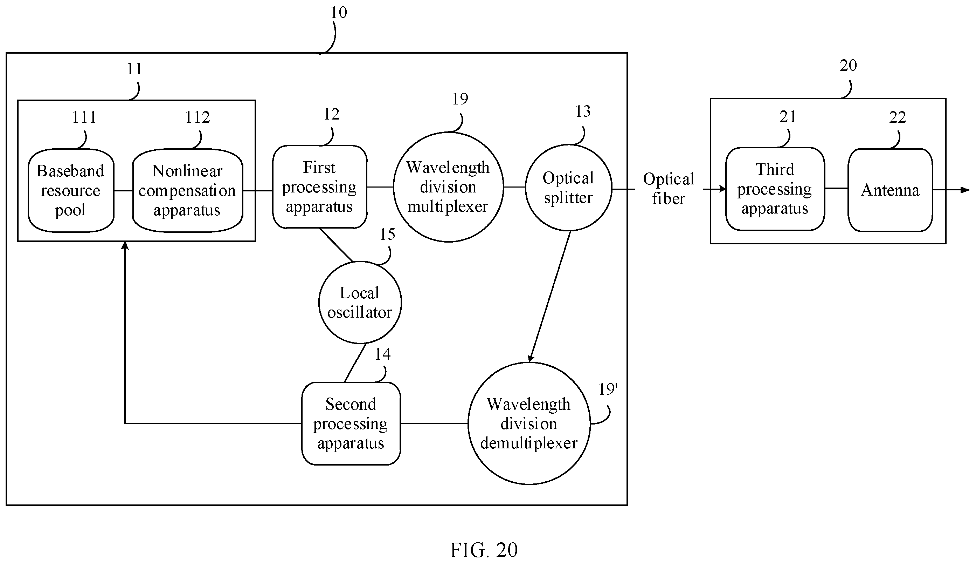

FIG. 20 is a schematic diagram of a structure of a RoF network system according to another embodiment of this application. As shown in FIG. 20, a central-side communication device 10 in this embodiment of this application may further include a wavelength division multiplexer 19 and a wavelength division demultiplexer 19'. The wavelength division multiplexer 19 is separately connected to a first processing apparatus 12 and an optical splitter 13. The wavelength division demultiplexer 19' is separately connected to the optical splitter 13 and a second processing apparatus 14.

The first processing apparatus 12 in this embodiment of this application is specifically configured to convert first baseband subsignals into first radio frequency subsignals, and convert the first radio frequency subsignals into N first optical subsignals. An optical signal includes the N first optical subsignals. The wavelength division multiplexer 19 is configured to combine the N first optical subsignals, and output a combined optical signal to the optical splitter 13.

It should be understood that the wavelength division multiplexer 19 combines the N first optical subsignals into one optical signal. The wavelength division demultiplexer 19' is configured to split a second optical signal into N second optical subsignals. Correspondingly, the second processing apparatus 14 is specifically configured to convert the second optical subsignals into second radio frequency subsignals, and convert the second radio frequency subsignals into N second baseband subsignals.

It should be understood that, for a manner in which the first processing apparatus 12 converts the first baseband subsignals into the first radio frequency subsignals and converts the first radio frequency subsignals into the first optical subsignals, and a manner in which the second processing apparatus 14 converts the second optical subsignals into the second radio frequency subsignals and converts the second radio frequency subsignals into the second baseband subsignals in this embodiment of this application, refer to related descriptions in the foregoing Embodiment 1.

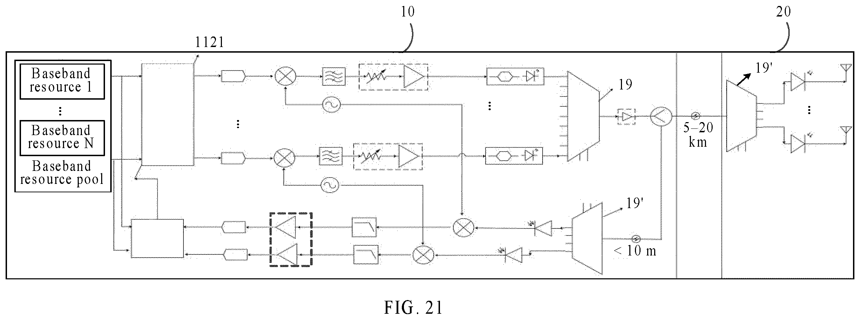

FIG. 21 is a schematic diagram of a structure of a RoF network system according to another embodiment of this application. As shown in FIG. 21, in a possible implementation, the first processing module includes N digital-to-analog conversion apparatuses 121 and N electro-optical signal conversion apparatuses 124. One digital-to-analog conversion apparatus 121 corresponds to one electro-optical signal conversion apparatus 124. The second processing apparatus 14 includes N optical-electro signal conversion apparatuses 141 and N analog-to-digital conversion apparatuses 144. One optical-electro signal conversion apparatus 141 corresponds to one analog-to-digital conversion apparatus 144. There are N local oscillators 15. One local oscillator 15 corresponds to one digital-to-analog conversion apparatus 121 and one analog-to-digital conversion apparatus 144.

The nonlinear compensation apparatus 112 is connected to the N digital-to-analog conversion apparatuses 121. Each digital-to-analog conversion apparatus 121 is connected to a corresponding electro-optical signal conversion apparatus 124 and a corresponding local oscillator 15. A wavelength division multiplexer 19 is separately connected to the N electro-optical signal conversion apparatuses 124 and an optical splitter 13. The wavelength division demultiplexer 19' is separately connected to the N optical-electro signal conversion apparatuses 141 and the optical splitter 13. Each analog-to-digital conversion apparatus 144 is further connected to a corresponding optical-electro signal conversion apparatus 141 and a corresponding local oscillator 15. The N analog-to-digital conversion apparatuses 144 are all connected to the nonlinear compensation apparatus 112.

The digital-to-analog conversion apparatus 121 is configured to convert the first baseband subsignals into the first radio frequency subsignals, and output the first radio frequency subsignals to the electro-optical signal conversion apparatus 124. The electro-optical signal conversion apparatus 124 is configured to convert the first radio frequency subsignal into the first optical subsignal, and output the first optical subsignal to the wavelength division multiplexer 19. The optical-electro signal conversion apparatus 141 is configured to convert the second optical subsignals into the second radio frequency subsignals, and output the second radio frequency subsignals to the analog-to-digital conversion apparatus 144. The analog-to-digital conversion apparatus 144 is configured to convert the second optical subsignals into the second radio frequency subsignals, convert the second radio frequency subsignals into the second baseband subsignals.

Optionally, as shown in a dashed box in FIG. 19, the first processing apparatus 12 may further include: the first processing module further includes: N first frequency mixers 122 and N bandpass filters 123. One digital-to-analog conversion apparatus 121 corresponds to one first frequency mixer 122, one bandpass filter 123, and one local oscillator 15. The second processing apparatus 14 further includes N second frequency mixers 142 and N low-pass filters 143. One analog-to-digital conversion apparatus 144 corresponds to one second frequency mixer 142, one low-pass filter 143, and one local oscillator 15.

Each first frequency mixer 122 is connected to a corresponding digital-to-analog conversion apparatus 121, a corresponding bandpass filter 123, and a corresponding local oscillator 15. Each bandpass filter 123 is further connected to a corresponding electro-optical signal conversion apparatus 124. Each second frequency mixer 142 is connected to a corresponding low-pass filter 143, a corresponding local oscillator 15, and a corresponding optical-electro signal conversion apparatus 141.

Based on the foregoing structure of the central-side communication device 10, optionally, the first processing apparatus 12 further includes N variable attenuators 125 and N low noise amplifiers 126. One bandpass filter 123 corresponds to one variable attenuator 125, one low noise amplifier 126, and one electro-optical signal conversion apparatus 124. Each variable attenuator 125 is separately connected to a corresponding bandpass filter 123 and a corresponding low noise amplifier 126. Each low noise amplifier 126 is further connected to a corresponding electro-optical signal conversion apparatus 124.

Based on the foregoing structure of the central-side communication device 10, optionally, the first processing apparatus 12 further includes an optical domain amplifier 127. The optical domain amplifier 127 is separately connected to the wavelength division multiplexer 19 and the optical splitter 13.

Based on the foregoing structure of the central-side communication device 10, optionally, the second processing apparatus 14 further includes N electrical domain amplifiers 145. For descriptions of the electrical domain amplifier 145, refer to related descriptions in the foregoing Embodiment 4.

It should be noted that for a compensation method of the nonlinear compensation apparatus 112 in this embodiment of this application, refer to related descriptions in the foregoing Embodiment 4. Details are not described herein again. As shown in FIG. 20 and FIG. 21, in a remote-side communication device 20 in this embodiment of this application, a third processing apparatus 21 includes a wavelength division demultiplexer 19' and N optical-electro signal conversion apparatuses 141. There are N antennas 22. One optical-electro signal conversion apparatus 141 corresponds to one antenna 22.

The wavelength division demultiplexer 19' is separately connected to the optical splitter 13 and the N optical-electro signal conversion apparatuses 141. Each optical-electro signal conversion apparatus 141 is further connected to a corresponding antenna 22. The wavelength division demultiplexer 19' is configured to split a first optical signal into N optical subsignals, and output the N optical subsignals to the corresponding optical-electro signal conversion apparatuses 141. The optical-electro signal conversion apparatus 141 is configured to convert an optical subsignal into a radio frequency subsignal, and output the radio frequency subsignal to the antenna 22. The antenna 22 is configured to transmit the radio frequency subsignal.

According to the structure of the RoF network system provided in this embodiment of this application, a feedback link is established in the central-side communication device, so that nonlinear compensation can be performed on a single-wavelength and multi-frequency baseband signal. This can compensate for nonlinear distortion of a single baseband signal in a transmission process, and can also compensate for nonlinear distortion caused by inter-modulation and crosstalk between a plurality of baseband signals. For other technical effects in this embodiment of this application, refer to related descriptions of the technical effects in the foregoing Embodiment 2, Embodiment 3, Embodiment 4, and Embodiment 5.

**Embodiment 7**

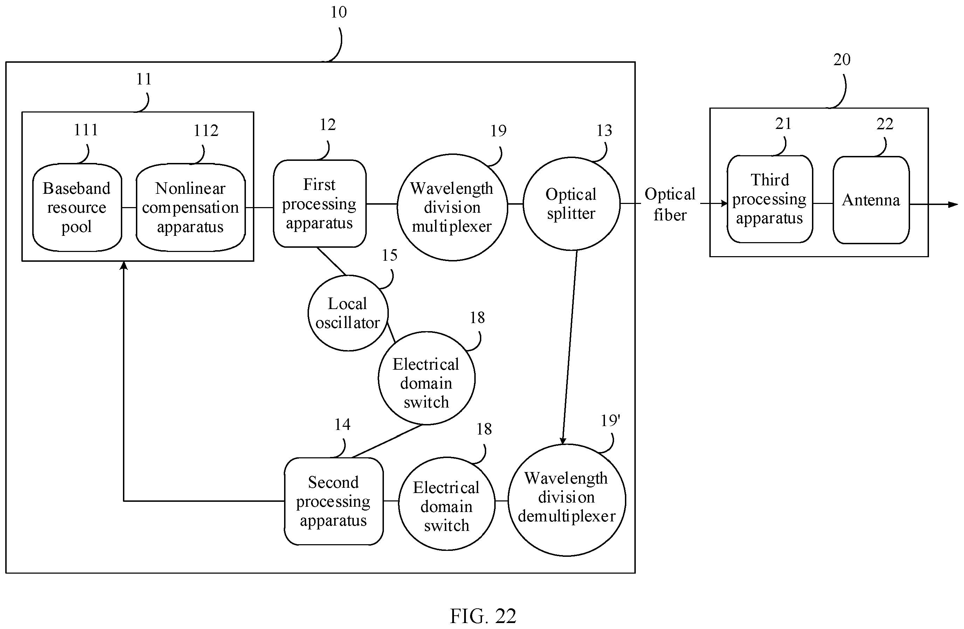

FIG. 22 is a schematic diagram of a structure of a RoF network system according to another embodiment of this application. As shown in FIG. 22, a central-side communication device 10 in this embodiment of this application may further include 2N electrical domain switches 18. N electrical domain switches 18 are disposed in a feedback link.

A local oscillator 15 is connected to the N electrical domain switches 18. The N electrical domain switches 18 are further connected to a second processing apparatus 14. One electrical domain switch 18 corresponds to one first radio frequency subsignal. The second processing apparatus 14 is further connected to remaining N electrical domain switches 18. One electrical domain switch 18 corresponds to one second radio frequency subsignal. One first radio frequency subsignal corresponds to one second radio frequency subsignal.

In this embodiment of this application, the electrical domain switch 18 is configured to control connection and disconnection of a feedback link of a second radio frequency subsignal corresponding to a first radio frequency subsignal. For a specific manner in which the electrical domain switch 18 controls connection and disconnection of the feedback link of the second radio frequency subsignal, refer to related descriptions in the foregoing Embodiment 5. Correspondingly, the second processing apparatus 14 is specifically configured to convert a fed-back second radio frequency subsignal into a second baseband subsignal.

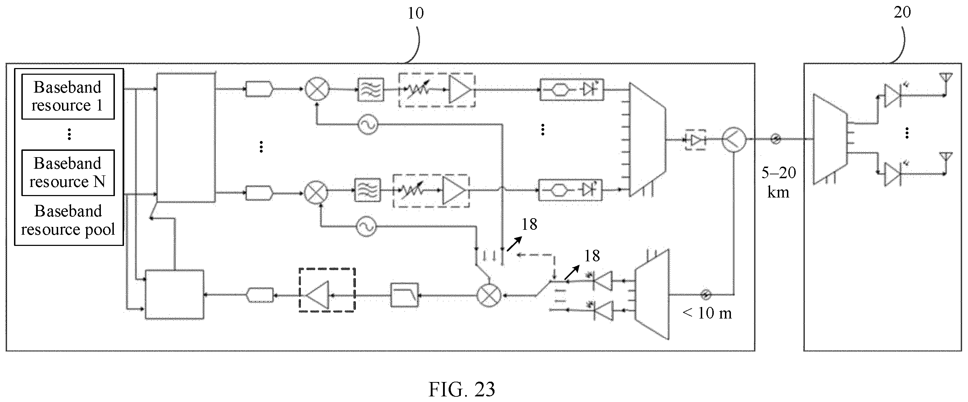

FIG. 23 is a schematic diagram of a structure of a RoF network system according to another embodiment of this application. As shown in FIG. 23, in a possible implementation, the first processing module includes N digital-to-analog conversion apparatuses 121 and N electro-optical signal conversion apparatuses 124. One digital-to-analog conversion apparatus 121 corresponds to one electro-optical signal conversion apparatus 124. The second processing apparatus 14 includes N optical-electro signal conversion apparatuses 141 and an analog-to-digital conversion apparatus 144. One optical-electro signal conversion apparatus 141 corresponds to one electrical domain switch 18. There are N local oscillators 15. One local oscillator 15 corresponds to one digital-to-analog conversion apparatus 121, one electrical domain switch 18, and one analog-to-digital conversion apparatus 144.

A nonlinear compensation apparatus 112 is connected to the N digital-to-analog conversion apparatuses 121. Each digital-to-analog conversion apparatus 121 is connected to a corresponding electro-optical signal conversion apparatus 124 and a corresponding local oscillator 15. Each local oscillator 15 is further connected to a corresponding electrical domain switch 18. The wavelength division multiplexer 19 is separately connected to the N electro-optical signal conversion apparatuses 124 and the optical splitter 13. The wavelength division demultiplexer 19' is separately connected to the N optical-electro signal conversion apparatuses 141 and the optical splitter 13. Each optical-electro signal conversion apparatus 141 is connected to a corresponding electrical domain switch 18. The 2N electrical domain switches 18 are all connected to the analog-to-digital conversion apparatus 144. The analog-to-digital conversion apparatus 144 is further connected to the nonlinear compensation apparatus 112.

The digital-to-analog conversion apparatus 121 is configured to convert a first baseband subsignal into a first radio frequency subsignal, and output the first radio frequency subsignal to the electro-optical signal conversion apparatus 124. The electro-optical signal conversion apparatus 124 is configured to convert the first radio frequency subsignal into a first optical subsignal, and output the first optical subsignal to the wavelength division multiplexer 19. The optical-electro signal conversion apparatus 141 is configured to convert a second optical subsignal into a second radio frequency subsignal. The electrical domain switch 18 is configured to control connection and disconnection of the second radio frequency subsignal. The analog-to-digital conversion apparatus 144 is configured to convert the fed-back second radio frequency subsignal into the second baseband subsignal.

Optionally, as shown in a dashed box in FIG. 23, the first processing apparatus 12 may further include N first frequency mixers 122 and N bandpass filters 123. One digital-to-analog conversion apparatus 121 corresponds to one first frequency mixer 122, one bandpass filter 123, and one local oscillator 15. The second processing apparatus 14 further includes a second frequency mixer 142 and a low-pass filter 143. Each first frequency mixer 122 is connected to a corresponding digital-to-analog conversion apparatus 121, a corresponding bandpass filter 123, and a corresponding local oscillator 15. Each local oscillator 15 is connected to the second frequency mixer 142 through a corresponding electrical domain switch 18. Each bandpass filter 123 is further connected to a corresponding electro-optical signal conversion apparatus 124.

The second frequency mixer 142 is further connected to a corresponding low-pass filter 143. The low-pass filter 143 is further connected to the analog-to-digital conversion apparatus 144. The remaining N electrical domain switches are all connected to the second frequency mixer 142.

Based on the foregoing structure of the central-side communication device 10, optionally, the first processing apparatus 12 further includes N variable attenuators 125 and N low noise amplifiers 126. One bandpass filter 123 corresponds to one variable attenuator 125, one low noise amplifier 126, and one electro-optical signal conversion apparatus 124. For descriptions of the variable attenuator 125 and the low noise amplifier 126, refer to related descriptions in the foregoing Embodiment 6.

Based on the foregoing structure of the central-side communication device 10, optionally, the first processing apparatus 12 further includes an optical domain amplifier 127. For descriptions of the optical domain amplifier 127, refer to related descriptions in the foregoing Embodiment 6.

Based on the foregoing structure of the central-side communication device 10, optionally, the second processing apparatus 14 further includes N electrical domain amplifiers 145. For descriptions of the electrical domain amplifier 145, refer to related descriptions in the foregoing Embodiment 4.

It should be noted that for a compensation method of the nonlinear compensation apparatus 112 in this embodiment of this application, refer to related descriptions in the foregoing Embodiment 4. Details are not described herein again. As shown in FIG. 22 and FIG. 23, for a structure of a remote-side communication device 20 in this embodiment of this application, refer to related descriptions in the foregoing Embodiment 6.

According to the structure of the RoF network system provided in this embodiment of this application, a feedback link is established in the central-side communication device, so that nonlinear compensation can be performed on a single-wavelength and multi-frequency baseband signal. This can compensate for nonlinear distortion of a single baseband signal in a transmission process, and can also compensate for nonlinear distortion caused by inter-modulation and crosstalk between a plurality of baseband signals. In addition, the electrical domain switches are disposed in the central-side communication device. Compared with the foregoing Embodiment 6, this embodiment can reduce repeated disposing of components and reduce costs. In addition, in this embodiment of this application, nonlinear compensation for a baseband signal at a specific frequency can be further implemented by controlling the electrical domain switch, and more components can be selected. For other technical effects in this embodiment of this application, refer to related descriptions of the technical effects in the foregoing Embodiment 2, Embodiment 3, Embodiment 4, Embodiment 5, and Embodiment 6.

An embodiment of this application further provides a communication system. As shown in FIG. 9, FIG. 10, FIG. 12, FIG. 14, FIG. 15, and FIG. 18 to FIG. 23, the communication system includes a central-side communication device and at least one remote-side communication device. The remote-side communication device includes an antenna. The remote-side communication device is configured to convert a first optical signal from the central-side communication device into a radio frequency signal, and transmit the radio frequency signal through the antenna. It should be understood that for specific structures of the central-side communication device and the remote-side communication device in this embodiment of this application, refer to related descriptions in the foregoing Embodiment 1 to Embodiment 7.

**Claims**

1. A communication device (10), comprising: a digital processing apparatus (11), a first processing apparatus (12), an optical splitter (13),

   a second processing apparatus (14), and a local oscillator (15), wherein the first processing apparatus (12) is separately connected to the digital processing apparatus (11), the local oscillator (15), and the optical splitter (13), the optical splitter (13) is further connected to the second processing apparatus (14), and the second processing apparatus (14) is further connected to the local oscillator (15) and the digital processing apparatus (11);
   the digital processing apparatus (11) is configured to generate a first baseband signal, perform nonlinear compensation on the first baseband signal, and output the first baseband signal to the first processing apparatus (12);
   the first processing apparatus (12) is configured to convert the first baseband signal into a first radio frequency signal, and convert the first radio frequency signal into an optical signal,
   the first processing apparatus (12) is further configured to output the optical signal to the optical splitter (13);
   the optical splitter (13) is configured to split the optical signal into a first optical signal and a second optical signal, output the first optical signal to at least one remote-side communication device (20), and output the second optical signal to the second processing apparatus (14);
   the second processing apparatus (14) is configured to convert the second optical signal into a second radio frequency signal, convert the second radio frequency signal into a second baseband signal, and output the second baseband signal to the digital processing apparatus (11); and
   the digital processing apparatus (11) is further configured to perform the nonlinear compensation on the first baseband signal based on the first baseband signal and the second baseband signal.

2. The communication device (10) according to claim 1, wherein the first baseband signal comprises N first baseband subsignals, the second baseband signal comprises N second baseband subsignals, the first radio frequency signal comprises N first radio frequency subsignals, the second radio frequency signal comprises N second radio frequency subsignals, the first radio frequency subsignals one-to-one correspond to the second radio frequency subsignals based on frequencies, and N is an integer greater than or equal to 1;

the digital processing apparatus (11) comprises a baseband resource pool (111) and a nonlinear compensation apparatus (112), wherein the baseband resource pool (111) is connected to the nonlinear compensation apparatus (112), and the nonlinear compensation apparatus (112) is further separately connected to the first processing apparatus (12) and the second processing apparatus (14);
the baseband resource pool (111) is configured to generate the N first baseband subsignals, and output the N first baseband subsignals to the first processing apparatus (12) by using the nonlinear compensation apparatus (112);
the first processing apparatus (12) is specifically configured to convert the first baseband subsignals into the first radio frequency subsignals, convert the N first radio frequency subsignals into the optical signal;
the second processing apparatus (14) is specifically configured to convert the second optical signal into the N second radio frequency subsignals, convert the second radio frequency subsignals into the second baseband subsignals; and
the nonlinear compensation apparatus (112) is configured to perform nonlinear compensation on the first baseband subsignals based on the first baseband subsignals and the second baseband subsignals corresponding to the first baseband subsignals.

3. The communication device (10) according to claim 2, wherein a wavelength of the optical signal is 1310 nm.

4. The communication device (10) according to claim 2 or 3, wherein when N is greater than 1, the communication device (10) further comprises an electrical domain combiner (16), and the electrical domain combiner (16) is connected to the first processing apparatus (12);

the first processing apparatus (12) is further specifically configured to output the first radio frequency subsignals to the electrical domain combiner (16);
the electrical domain combiner (16) is configured to combine the N first radio frequency subsignals, and output a combined radio frequency signal to the first processing apparatus (12); and
the first processing apparatus (12) is further specifically configured to convert the combined radio frequency signal into the optical signal.

5. The communication device (10) according to claim 4, wherein the communication device (10) further comprises an electrical domain splitter (17), and the electrical domain splitter (17) is connected to the second processing apparatus (14);

the second processing apparatus (14) is further specifically configured to output the second radio frequency signal to the electrical domain splitter (17); and
the electrical domain splitter (17) is configured to split the second radio frequency signal into the N second radio frequency subsignals, and output the N second radio frequency subsignals to the second processing apparatus (14).

6. The communication device (10) according to claim 5, wherein the first processing apparatus (12)comprises an electro-optical signal conversion apparatus (124) and N digital-to-analog conversion apparatuses (121), the second processing apparatus (14) comprises an optical-electro signal conversion apparatus (141) and N analog-to-digital conversion apparatuses (144), there are N local oscillators (15), and one local oscillator (15) corresponds to one digital-to-analog conversion apparatus (121) and one analog-to-digital conversion apparatus (144); and
the electrical domain combiner (16) is separately connected to the N digital-to-analog conversion apparatuses (121) and the electro-optical signal conversion apparatus (124), the N digital-to-analog conversion apparatuses (121) are further connected to the nonlinear compensation apparatus (112), each local oscillator (15) is separately connected to a corresponding digital-to-analog conversion apparatus (121) and a corresponding analog-to-digital conversion apparatus (144), the optical splitter (13) is separately connected to the electro-optical signal conversion apparatus (124) and the optical-electro signal conversion apparatus (141), the electrical domain splitter (17) is separately connected to the optical-electro signal conversion apparatus (141) and the N analog-to-digital conversion apparatuses (144), and the N analog-to-digital conversion apparatuses (144) are all connected to the nonlinear compensation apparatus (112).

7. The communication device (10) according to claim 4, wherein the communication device (10) further comprises N electrical domain switches (18), the electrical domain switches (18) are separately connected to the local oscillator (15) and the second processing apparatus (14), and one electrical domain switch (18) corresponds to one first radio frequency subsignal;

   the electrical domain switch (18) is configured to control connection and disconnection of a feedback link of a second radio frequency subsignal corresponding to a first radio frequency subsignal; and
   the second processing apparatus (14) is further specifically configured to convert a fed-back second radio frequency subsignal into a second baseband subsignal.

8. The communication device (10) according to claim 7, wherein the first processing apparatus (12)comprises an electro-optical signal conversion apparatus (124) and N digital-to-analog conversion apparatuses (121), the second processing apparatus (14) comprises an optical-electro signal conversion apparatus (141) and an analog-to-digital conversion apparatus (144), there are N local oscillators (15), and one local oscillator (15) corresponds to one digital-to-analog conversion apparatus (121) and one electrical domain switch (18); and
   the electrical domain combiner (16) is separately connected to the N digital-to-analog conversion apparatuses (121) and the electro-optical signal conversion apparatus (124), the N digital-to-analog conversion apparatuses (121) are further connected to the nonlinear compensation apparatus (112), each local oscillator (15) is connected to a corresponding digital-to-analog conversion apparatus (121) and a corresponding electrical domain switch (18), the optical splitter (13) is separately connected to the electro-optical signal conversion apparatus (124) and the optical-electro signal conversion apparatus (141), the analog-to-digital conversion apparatus (144) is separately connected to the optical-electro signal conversion apparatus (141), the N electrical domain switches (18), and the nonlinear compensation apparatus (112).

9. The communication device (10) according to claim 2 or 3, wherein when N is greater than 1, the communication device (10) further comprises a wavelength division multiplexer (19) and a wavelength division demultiplexer (19'), the wavelength division multiplexer (19) is separately connected to the first processing apparatus (12) and the optical splitter (13), and the wavelength division demultiplexer (19') is separately connected to the optical splitter (13) and the second processing apparatus (14);

   the first processing apparatus (12) is specifically configured to convert the first radio frequency subsignals into N first optical subsignals, wherein the optical signal comprises the N first optical subsignals;
   the wavelength division multiplexer (19) is configured to combine the N first optical subsignals, and output a combined optical signal to the optical splitter (13);
   the wavelength division demultiplexer (19') is configured to split the second optical signal into N second optical subsignals; and
   the second processing apparatus (14) is further specifically configured to convert the second optical subsignals into the second radio frequency subsignals, and convert the second radio frequency subsignals into the N second baseband subsignals.

10. The communication device (10) according to claim 9, wherein the first processing apparatus (12)comprises N digital-to-analog conversion apparatuses (121) and N electro-optical signal conversion apparatuses (124), one digital-to-analog conversion apparatus (121) corresponds to one electro-optical signal conversion apparatus (124), the second processing apparatus (14) comprises N optical-electro signal conversion apparatuses (141) and N analog-to-digital conversion apparatuses (144), one optical-electro signal conversion apparatus (141) corresponds to one analog-to-digital conversion apparatus (144), there are N local oscillators (15), and one local oscillator corresponds (15) to one digital-to-analog conversion apparatus (121) and one analog-to-digital conversion apparatus (144); and
   the nonlinear compensation apparatus (112) is connected to the N digital-to-analog conversion apparatuses (121), each digital-to-analog conversion apparatus (121) is connected to a corresponding electro-optical signal conversion apparatus (124) and a corresponding local oscillator (15), the wavelength division multiplexer (19) is separately connected to the N electro-optical signal conversion apparatuses (124) and the optical splitter (13), the wavelength division demultiplexer (19') is separately connected to the N optical-electro signal conversion apparatuses (141) and the optical splitter (13), each analog-to-digital conversion apparatus (144) is further connected to a corresponding optical-electro signal conversion apparatus (141) and a corresponding local oscillator (15), and the N analog-to-digital conversion apparatuses (144) are all connected to the nonlinear compensation apparatus (112).

**11.** The communication device (10) according to claim 9, wherein the communication device (10) further comprises 2N electrical domain switches (18), the local oscillator (15) is connected to N electrical domain switches (18), the N electrical domain switches (18) are further connected to the second processing apparatus (14), one electrical domain switch (18) corresponds to one first radio frequency subsignal, the second processing apparatus (14) is further connected to remaining N electrical domain switches (18), one electrical domain switch (18) corresponds to one second radio frequency subsignal, and one first radio frequency subsignal corresponds to one second radio frequency subsignal;

the electrical domain switch (18) is configured to control connection and disconnection of a feedback link of a second radio frequency subsignal corresponding to a first radio frequency subsignal; and
the second processing apparatus (14) is further specifically configured to convert a fed-back second radio frequency subsignal into a second baseband subsignal.

**12.** The communication device (10) according to claim 11, wherein the first processing apparatus (12)comprises N digital-to-analog conversion apparatuses (121) and N electro-optical signal conversion apparatuses (124), one digital-to-analog conversion apparatus (121) corresponds to one electro-optical signal conversion apparatus (124), the second processing apparatus (14) comprises N optical-electro signal conversion apparatuses (141) and an analog-to-digital conversion apparatus (144), one optical-electro signal conversion apparatus (141) corresponds to one electrical domain switch (18), there are N local oscillators (15), and one local oscillator (15) corresponds to one digital-to-analog conversion apparatus (121), one electrical domain switch (18), and one analog-to-digital conversion apparatus (144); and
the nonlinear compensation apparatus (112) is connected to the N digital-to-analog conversion apparatuses (121), each digital-to-analog conversion apparatus (121) is connected to a corresponding electro-optical signal conversion apparatus (124) and a corresponding local oscillator (15), each local oscillator (15) is further connected to a corresponding electrical domain switch (18), the wavelength division multiplexer (19) is separately connected to the N electro-optical signal conversion apparatuses (124) and the optical splitter (13), the wavelength division demultiplexer (19') is separately connected to the N optical-electro signal conversion apparatuses (141) and the optical splitter (13), each optical-electro signal conversion apparatus (141) is connected to a corresponding electrical domain switch (18), the 2N electrical domain switches (18) are all connected to the analog-to-digital conversion apparatus (144), and the analog-to-digital conversion apparatus (144) is further connected to the nonlinear compensation apparatus (112).

**13.** The communication device (10) according to claim 6, 8, 10, or 12, wherein the first processing apparatus (12)further comprises N first frequency mixers (122) and N bandpass filters (123), one digital-to-analog conversion apparatus (121) corresponds to one first frequency mixer (122), one bandpass filter (123), and one local oscillator (15), when the second processing apparatus (14) comprises N analog-to-digital conversion apparatuses (144), the second processing apparatus (14) further comprises N second frequency mixers (142) and N low-pass filters (143), and one analog-to-digital conversion apparatus (144) corresponds to one second frequency mixer (142), one low-pass filter (143), and one local oscillator (15);

each first frequency mixer (122) is connected to a corresponding digital-to-analog conversion apparatus (121), a corresponding bandpass filter (123), and a corresponding local oscillator (15), and each bandpass filter (123) is further connected to the electrical domain combiner (16) or a corresponding electro-optical signal conversion apparatus (124); and
each second frequency mixer (142) is connected to a corresponding low-pass filter (143) and a corresponding local oscillator (15), and each second frequency mixer (142) is further connected to the electrical domain splitter (17) or a corresponding optical-electro signal conversion apparatus (141).

**14.** The communication device (10) according to claim 6, 8, 10, or 12, wherein the first processing apparatus (12)further comprises N first frequency mixers (122) and N bandpass filters (123), one digital-to-analog conversion apparatus (121) corresponds to one first frequency mixer (122), one bandpass filter (123), and one local oscillator (15), when the second processing apparatus (14) comprises one analog-to-digital conversion apparatus (144), the second processing apparatus (14) further comprises a second frequency mixer (142) and a low-pass filter (143);

each first frequency mixer (122) is connected to a corresponding digital-to-analog conversion apparatus (121), a corresponding bandpass filter (123), and a corresponding local oscillator (15), each local oscillator (15) is connected to the second frequency mixer (142) through a corresponding electrical domain switch (18), and each bandpass filter (123) is further connected to the electrical domain combiner (16) or a corresponding electro-optical signal conversion apparatus (124); and
the second frequency mixer (142) is connected to the low-pass filter (143), the low-pass filter (143) is further connected to the analog-to-digital conversion apparatus (144), and the electrical domain switches (18) are all connected to the second frequency mixer (142).

15. A communication system, comprising: the communication device (10) according to any one of claims 1 to 14, and at least one remote-side communication device (20), wherein the remote-side communication device (20) comprises an antenna (22); and
the remote-side communication device (20) is configured to convert a first optical signal from a central-side communication device (10) into a radio frequency signal, and transmit the radio frequency signal through the antenna (22).

**Patentansprüche**

1. Kommunikationsvorrichtung (10), die umfasst: eine digitale

Verarbeitungseinrichtung (11), eine erste Verarbeitungseinrichtung (12), einen optischen Splitter (13), eine zweite Verarbeitungseinrichtung (14) und einen lokalen Oszillator (15), wobei die erste Verarbeitungseinrichtung (12) separat mit der digitalen Verarbeitungseinrichtung (11), dem lokalen Oszillator (15) und dem optischen Splitter (13) verbunden ist, der optische Splitter (13) ferner mit der zweiten Verarbeitungseinrichtung (14) verbunden ist und die zweite Verarbeitungseinrichtung (14) ferner mit dem lokalen Oszillator (15) und der digitalen Verarbeitungseinrichtung (11) verbunden ist;
die digitale Verarbeitungseinrichtung (11) konfiguriert ist, um ein erstes Basisbandsignal zu erzeugen, eine nichtlineare Kompensation an dem ersten Basisbandsignal durchzuführen und das erste Basisbandsignal an die erste Verarbeitungseinrichtung (12) auszugeben;
die erste Verarbeitungseinrichtung (12) konfiguriert ist, um das erste Basisbandsignal in ein erstes Hochfrequenzsignal umzuwandeln und das erste Hochfrequenzsignal in ein optisches Signal umzuwandeln,
die erste Verarbeitungseinrichtung (12) ferner konfiguriert ist, um das optische Signal an den optischen Splitter (13) auszugeben;
der optische Splitter (13) konfiguriert ist, um das optische Signal in ein erstes optisches Signal und ein zweites optisches Signal zu splitten, das erste optische Signal an mindestens eine remote-seitige Kommunikationsvorrichtung (20) auszugeben und das zweite optische Signal an die zweite Verarbeitungseinrichtung (14) auszugeben;
die zweite Verarbeitungseinrichtung (14) konfiguriert ist, um das zweite optische Signal in ein zweites Hochfrequenzsignal umzuwandeln, das zweite Hochfrequenzsignal in ein zweites Basisbandsignal umzuwandeln und das zweite Basisbandsignal an die digitale Verarbeitungseinrichtung (11) auszugeben; und
die digitale Verarbeitungseinrichtung (11) ferner konfiguriert ist, um die nichtlineare Kompensation an dem ersten Basisbandsignal basierend auf dem ersten Basisbandsignal und dem zweiten Basisbandsignal durchzuführen.

2. Kommunikationsvorrichtung (10) nach Anspruch 1, wobei das erste Basisbandsignal N erste Basisband-Teilsignale umfasst, das zweite Basisbandsignal N zweite Basisband-Teilsignale umfasst, das erste Hochfrequenzsignal N erste Hochfrequenz-Teilsignale umfasst, das zweite Hochfrequenzsignal N zweite Hochfrequenz-Teilsignale umfasst, die ersten Hochfrequenz-Teilsignale den zweiten Hochfrequenz-Teilsignalen basierend auf Frequenzen eins zu eins entsprechen und N eine ganze Zahl größer oder gleich 1 ist;

die digitale Verarbeitungseinrichtung (11) einen Basisband-Ressourcenpool (111) und eine nichtlineare Kompensationseinrichtung (112) umfasst, wobei der Basisband-Ressourcenpool (111) mit der nichtlinearen Kompensationseinrichtung (112) verbunden ist und die nichtlineare Kompensationseinrichtung (112) ferner separat mit der ersten Verarbeitungseinrichtung (12) und der zweiten Verarbeitungseinrichtung (14) verbunden ist;
der Basisband-Ressourcenpool (111) konfiguriert ist, um die N ersten Basisband-Teilsignale zu erzeugen und die N ersten Basisband-Teilsignale durch Verwenden der nichtlinearen Kompensationseinrichtung (112) an die erste Verarbeitungseinrichtung (12) auszugeben;
die erste Verarbeitungseinrichtung (12) speziell konfiguriert ist, um die ersten Basisband-Teilsignale in die ersten Hochfrequenz-Teilsignale umzuwandeln, die N ersten Hochfrequenz-Teilsignale in das optische Signal umzuwandeln;
die zweite Verarbeitungseinrichtung (14) speziell konfiguriert ist, um das zweite optische Signal in die N zweiten Hochfrequenz-Teilsignale umzuwandeln, die zweiten Hochfrequenz-Teilsignale in die zweiten Basisband-Teilsignale umzuwandeln; und die nichtlineare Kompensationseinrichtung (112) konfiguriert ist, um eine nichtlineare Kompensation an den ersten Basisband-Teilsignalen basierend auf den ersten Basisband-Teilsignalen und den zweiten Basisband-Teilsignalen durchzuführen, die den ersten Basisband-Teilsignalen entsprechen.

3. Kommunikationsvorrichtung (10) nach Anspruch 2, wobei eine Wellenlänge des optischen Signals 1310 nm beträgt.

4. Kommunikationsvorrichtung (10) nach Anspruch 2 oder 3, wobei, wenn N größer als 1 ist, die Kommunikationsvorrichtung (10) ferner einen elektrischen Domain-Combiner (16) umfasst und der elektrische Domain-Combiner (16) mit der ersten Verarbeitungseinrichtung (12) verbunden ist;

die erste Verarbeitungseinrichtung (12) ferner speziell konfiguriert ist, um die ersten Hochfrequenz-Teilsignale an den elektrischen Domain-Combiner (16) auszugeben; der elektrische Domain-Combiner (16) konfiguriert ist, um die N ersten Hochfrequenz-Teilsignale zu kombinieren und ein kombiniertes Hochfrequenzsignal an die erste Verarbeitungseinrichtung (12) auszugeben; und

die erste Verarbeitungseinrichtung (12) ferner speziell konfiguriert ist, um das kombinierte Hochfrequenzsignal in das optische Signal umzuwandeln.

5. Kommunikationsvorrichtung (10) nach Anspruch 4, wobei die Kommunikationsvorrichtung (10) ferner einen elektrischen Domain-Splitter (17) umfasst und der elektrische Domain-Splitter (17) mit der zweiten Verarbeitungseinrichtung (14) verbunden ist;

die zweite Verarbeitungseinrichtung (14) ferner speziell konfiguriert ist, um das zweite Hochfrequenzsignal an den elektrischen Domain-Splitter (17) auszugeben; und der elektrische Domain-Splitter (17) konfiguriert ist, um das zweite Hochfrequenzsignal in die N zweiten Hochfrequenz-Teilsignale zu splitten und die N zweiten Hochfrequenz-Teilsignale an die zweite Verarbeitungseinrichtung (14) auszugeben.

6. Kommunikationsvorrichtung (10) nach Anspruch 5, wobei die erste Verarbeitungseinrichtung (12) eine elektro-optische Signalumwandlungseinrichtung (124) und N Digital-Analog-Umwandlungseinrichtungen (121) umfasst, die zweite Verarbeitungseinrichtung (14) eine optisch-elektrische Signalumwandlungseinrichtung (141) und N Analog-Digital-Umwandlungseinrichtungen (144) umfasst, N lokale Oszillatoren (15) vorhanden sind und ein lokaler Oszillator (15) einer Digital-Analog-Umwandlungseinrichtung (121) und einer Analog-Digital-Umwandlungseinrichtung (144) entspricht; und

der elektrische Domain-Combiner (16) separat mit den N Digital-Analog-Umwandlungseinrichtungen (121) und der elektro-optischen Signalumwandlungseinrichtung (124) verbunden ist, die N Digital-Analog-Umwandlungseinrichtungen (121) ferner mit der nichtlinearen Kompensationseinrichtung (112) verbunden sind, jeder lokale Oszillator (15) separat mit einer entsprechenden Digital-Analog-Umwandlungseinrichtung (121) und einer entsprechenden Analog-Digital-Umwandlungseinrichtung (144) verbunden ist, der optische Splitter (13) separat mit der elektro-optischen Signalumwandlungseinrichtung (124) und der optisch-elektrischen Signalumwandlungseinrichtung (141) verbunden ist, der elektrische Domain-Splitter (17) separat mit der optisch-elektrischen Signalumwandlungseinrichtung (141) und den N Analog-Digital-Umwandlungseinrichtungen (144) verbunden ist, und die N Analog-Digital-Umwandlungseinrichtungen (144) alle mit der nichtlinearen Kompensationseinrichtung (112) verbunden sind.

7. Kommunikationsvorrichtung (10) nach Anspruch 4, wobei die Kommunikationsvorrichtung (10) ferner N elektrische Domain-Switches (18) umfasst, die elektrischen Domain-Switches (18) separat mit dem lokalen Oszillator (15) und der zweiten Verarbeitungseinrichtung (14) verbunden sind und ein elektrischer Domain-Switch (18) einem ersten Hochfrequenz-Teilsignal entspricht;

der elektrische Domain-Switch (18) konfiguriert ist, um ein Verbinden und Trennen einer Rückkopplungsverbindung eines zweiten Hochfrequenz-Teilsignals zu steuern, das einem ersten Hochfrequenz-Teilsignal entspricht; und

die zweite Verarbeitungseinrichtung (14) ferner speziell konfiguriert ist, um ein rückgekoppeltes zweites Hochfrequenz-Teilsignal in ein zweites Basisband-Teilsignal umzuwandeln.

8. Kommunikationsvorrichtung (10) nach Anspruch 7, wobei die erste Verarbeitungseinrichtung (12) eine elektro-optische Signalumwandlungseinrichtung (124) und N Digital-Analog-Umwandlungseinrichtungen (121) umfasst, die zweite Verarbeitungseinrichtung (14) eine optisch-elektrische Signalumwandlungseinrichtung (141) und eine Analog-Digital-Umwandlungseinrichtung (144) umfasst, N lokale Oszillatoren (15) vorhanden sind und ein lokaler Oszillator (15) einer Digital-Analog-Umwandlungseinrichtung (121) und einem elektrischen Domain-Switch (18) entspricht; und

der elektrische Domain-Combiner (16) separat mit den N Digital-Analog-Umwandlungseinrichtungen (121) und der elektro-optischen Signalumwandlungseinrichtung (124) verbunden ist, die N Digital-Analog-Umwandlungseinrichtungen (121) ferner mit der nichtlinearen Kompensationseinrichtung (112) verbunden sind, jeder lokale Oszillator (15) mit einer entsprechenden Digital-Analog-Umwandlungseinrichtung (121) und einem entsprechenden elektrischen Domain-Switch (18) verbunden ist, der optische Splitter (13) separat mit der elektro-optischen Signalumwandlungseinrichtung (124) und der optisch-elektrischen Signalumwandlungseinrichtung (141) verbunden ist, die Analog-Digital-Umwandlungseinrichtung (144) separat mit der optisch-elektrischen Signalumwandlungseinrichtung (141), den N elektrischen Domain-Switches (18) und der nichtlinearen Kompensationseinrichtung (112) verbunden ist.

9. Kommunikationsvorrichtung (10) nach Anspruch 2 oder 3, wobei, wenn N größer als 1 ist, die Kommunikationsvorrichtung (10) ferner einen Wellenlängen-Multiplexer (19) und einen Wellenlängen-Demultiplexer (19') umfasst, wobei der Wellenlängen-Multiplexer (19) separat mit der ersten Verarbeitungseinrichtung (12) und dem optischen Splitter (13) verbunden ist und der Wellenlängen-Demultiplexer (19') separat mit dem optischen Splitter (13) und der zweiten Verarbeitungseinrichtung (14) verbunden ist;

> die erste Verarbeitungseinrichtung (12) speziell konfiguriert ist, um die ersten Hochfrequenz-Teilsignale in N erste optische Teilsignale umzuwandeln, wobei das optische Signal die N ersten optischen Teilsignale umfasst;
> der Wellenlängen-Multiplexer (19) konfiguriert ist, um die N ersten optischen Teilsignale zu kombinieren und ein kombiniertes optisches Signal an den optischen Splitter (13) auszugeben;
> der Wellenlängen-Demultiplexer (19') konfiguriert ist, um das zweite optische Signal in N zweite optische Teilsignale zu splitten; und
> die zweite Verarbeitungseinrichtung (14) ferner speziell konfiguriert ist, um die zweiten optischen Teilsignale in die zweiten Hochfrequenz-Teilsignale umzuwandeln und die zweiten Hochfrequenz-Teilsignale in die N zweiten Basisband-Teilsignale umzuwandeln.

10. Kommunikationsvorrichtung (10) nach Anspruch 9, wobei die erste Verarbeitungseinrichtung (12) N Digital-Analog-Umwandlungseinrichtungen (121) und N elektro-optische Signalumwandlungseinrichtungen (124) umfasst, eine Digital-Analog-Umwandlungseinrichtung 121) einer elektro-optischen Signalumwandlungseinrichtung (124) entspricht, die zweite Verarbeitungseinrichtung (14) N optisch-elektrische Signalumwandlungseinrichtungen (141) und N Analog-Digital-Umwandlungseinrichtungen (144) umfasst, eine optisch-elektrische Signalumwandlungseinrichtung (141) einer Analog-Digital-

> Umwandlungseinrichtung (144) entspricht, N lokale Oszillatoren (15) vorhanden sind und ein lokaler Oszillator einer Digital-Analog-Umwandlungseinrichtung (121) und einer Analog-Digital-Umwandlungseinrichtung (144) entspricht (15); und
> die nichtlineare Kompensationseinrichtung (112) mit den N Digital-Analog-Umwandlungseinrichtungen (121) verbunden ist, jede Digital-Analog-Umwandlungseinrichtung (121) mit einer entsprechenden elektro-optischen Signalumwandlungseinrichtung (124) und einem entsprechenden lokalen Oszillator (15) verbunden ist, der Wellenlängen-Multiplexer (19) separat mit den N elektro-optischen Signalumwandlungseinrichtungen (124) und dem optischen Splitter (13) verbunden ist, der Wellenlängen-Demultiplexer (19') separat mit den N optisch-elektrischen Signalumwandlungseinrichtungen (141) und dem optischen Splitter (13) verbunden ist, jede Analog-Digital-Umwandlungseinrichtung (144) ferner mit einer entsprechenden optisch-elektrischen Signalumwandlungseinrichtung (141) und einem entsprechenden lokalen Oszillator (15) verbunden ist und die N Analog-Digital-Umwandlungseinrichtungen (144) alle mit der nichtlinearen Kompensationseinrichtung (112) verbunden sind.

11. Kommunikationsvorrichtung (10) nach Anspruch 9, wobei die Kommunikationsvorrichtung (10) ferner 2N elektrische Domain-Switches (18) umfasst, der lokale Oszillator (15) mit N elektrischen Domain-Switches (18) verbunden ist, die N elektrischen Domain-Switches (18) ferner mit der zweiten Verarbeitungseinrichtung (14) verbunden sind, ein elektrischer Domain-Switch (18) einem ersten Hochfrequenz-Teilsignal entspricht, die zweite Verarbeitungseinrichtung (14) ferner mit den verbleibenden N elektrischen Domain-Switches (18) verbunden ist, ein elektrischer Domain-Switch (18) einem zweiten Hochfrequenz-Teilsignal entspricht und ein erstes Hochfrequenz-Teilsignal einem zweiten Hochfrequenz-Teilsignal entspricht;

> der elektrische Domain-Switch (18) konfiguriert ist, um das Verbinden und Trennen einer Rückkopplungsverbindung eines zweiten Hochfrequenz-Teilsignals zu steuern, das einem ersten Hochfrequenz-Teilsignal entspricht; und
> die zweite Verarbeitungseinrichtung (14) ferner speziell konfiguriert ist, um ein rückgekoppeltes zweites Hochfrequenz-Teilsignal in ein zweites Basisband-Teilsignal umzuwandeln.

12. Kommunikationsvorrichtung (10) nach Anspruch 11, wobei die erste Verarbeitungseinrichtung (12) N Digital-Analog-Umwandlungseinrichtungen (121) und N elektro-optische Signalumwandlungseinrichtungen (124) umfasst, eine Digital-Analog-Umwandlungseinrichtung 121) einer elektro-optischen Signalumwandlungseinrichtung (124) entspricht, die zweite Verarbeitungseinrichtung (14) N optisch-elektrische Signalumwandlungseinrichtungen (141) und eine Analog-Digital-Umwandlungseinrichtung (144) umfasst, eine optisch-elektrische Signalumwandlungseinrichtung (141) einem elektrischen Domain-Switch (18) entspricht, N lokale Oszillatoren (15) vorhanden sind und ein lokaler Oszillator (15) einer Digital-Analog-Umwandlungseinrichtung (121), einem elektrischen Domain-Switch (18) und einer Analog-Digital-Umwandlungseinrichtung (144) entspricht; und die nichtlineare Kompensationseinrichtung (112) mit den N Digital-Analog-Umwandlungseinrichtungen (121) verbunden ist, jede Digital-Analog-Umwandlungseinrichtung (121) mit einer entsprechenden elektro-optischen Signalumwandlungseinrichtung (124) und einem entsprechenden lokalen Oszillator (15) verbunden ist, jeder lokale Oszillator (15) ferner mit einem entsprechenden elektrischen Domain-Switch (18) verbunden ist, der Wellenlängen-Multiplexer (19) separat mit den N elektro-optischen Signalumwandlungseinrichtungen (124) und dem optischen Splitter (13) verbunden ist, der Wellenlängen-Demultiplexer (19') separat mit den N optisch-elektrischen Signalumwandlungseinrichtungen (141) und dem optischen Splitter (13) verbunden ist, jede optisch-elektrische Signalumwandlungseinrichtung (141) mit einem entsprechenden Domain-Switch (18) verbunden ist, die 2N elektrischen Domain-Switches (18) alle mit der Analog-Digital-Umwandlungseinrichtung (144) verbunden sind und die Analog-Digital-Umwandlungseinrichtung (144) ferner mit der nichtlinearen Kompensationseinrichtung (112) verbunden ist.

13. Kommunikationsvorrichtung (10) nach Anspruch 6, 8, 10 oder 12, wobei die erste Verarbeitungseinrichtung (12) ferner N erste Frequenzmischer (122) und

    N Bandpassfilter (123) umfasst, eine Digital-Analog-Umwandlungseinrichtung (121) einem ersten Frequenzmischer (122), einem Bandpassfilter (123) und einem lokalen Oszillator (15) entspricht, wenn die zweite Verarbeitungseinrichtung (14) N Analog-Digital-Umwandlungseinrichtungen (144) umfasst, die zweite Verarbeitungseinrichtung (14) ferner N zweite Frequenzmischer (142) und
    N Tiefpassfilter (143) umfasst und eine Analog-Digital-Umwandlungseinrichtung (144) einem zweiten Frequenzmischer (142), einem Tiefpassfilter (143) und einem lokalen Oszillator (15) entspricht;
    jeder erste Frequenzmischer (122) mit einer entsprechenden Digital-Analog-Umwandlungseinrichtung (121), einem entsprechenden Bandpassfilter (123) und einem entsprechenden lokalen Oszillator (15) verbunden ist, und jeder Bandpassfilter (123) ferner mit dem elektrischen Domain-Combiner (16) oder einer entsprechenden elektro-optischen Signalumwandlungseinrichtung (124) verbunden ist; und
    jeder zweite Frequenzmischer (142) mit einem entsprechenden Tiefpassfilter (143) und einem entsprechenden lokalen Oszillator (15) verbunden ist, und jeder zweite Frequenzmischer (142) ferner mit dem elektrischen Domain-Splitter (17) oder einer entsprechenden optisch-elektrischen Signalumwandlungseinrichtung (141) verbunden ist.

14. Kommunikationsvorrichtung (10) nach Anspruch 6, 8, 10 oder 12, wobei die erste Verarbeitungseinrichtung (12) ferner N erste Frequenzmischer (122) und

    N Bandpassfilter (123) umfasst, eine Digital-Analog-Umwandlungseinrichtung (121) einem ersten Frequenzmischer (122), einem Bandpassfilter (123) und einem lokalen Oszillator (15) entspricht, wenn die zweite Verarbeitungseinrichtung (14) eine Analog-Digital-Umwandlungseinrichtung (144) umfasst, die zweite Verarbeitungseinrichtung (14) ferner einen zweiten Frequenzmischer (142) und einen Tiefpassfilter (143) umfasst;
    jeder erste Frequenzmischer (122) mit einer entsprechenden Digital-Analog-Umwandlungseinrichtung (121), einem entsprechenden Bandpassfilter (123) und einem entsprechenden lokalen Oszillator (15) verbunden ist, jeder lokale Oszillator (15) über einen entsprechenden elektrischen Domain-Switch (18) mit dem zweiten Frequenzmischer (142) verbunden ist, und jeder Bandpassfilter (123) ferner mit dem elektrischen Domain-Combiner (16) oder einer entsprechenden elektro-optischen Signalumwandlungseinrichtung (124) verbunden ist; und
    der zweite Frequenzmischer (142) mit dem Tiefpassfilter (143) verbunden ist, der Tiefpassfilter (143) ferner mit der Analog-Digital-Umwandlungseinrichtung (144) verbunden ist und die elektrischen Domain-Switches (18) alle mit dem zweiten Frequenzmischer (142) verbunden sind.

15. Kommunikationssystem, umfassend: die Kommunikationsvorrichtung (10) nach einem der Ansprüche 1 bis 14 und mindestens eine remote-seitige Kommunikationsvorrichtung (20), wobei die remote-seitige Kommunikationsvorrichtung (20) eine Antenne (22) umfasst; und

die remote-seitige Kommunikationsvorrichtung (20) konfiguriert ist, um ein erstes optisches Signal von einer zentralseitigen Kommunikationsvorrichtung (10) in ein Hochfrequenzsignal umzuwandeln und das Hochfrequenzsignal über die Antenne (22) zu übertragen.

**Revendications**

1. Dispositif de communication (10), comprenant : un appareil de traitement numérique (11), un premier appareil de traitement (12), un séparateur optique (13), un second appareil de traitement (14) et un oscillateur local (15), dans lequel le premier appareil de traitement (12) est connecté séparément à l'appareil de traitement numérique (11), à l'oscillateur local (15) et au séparateur optique (13), le séparateur optique (13) est en outre connecté au second appareil de traitement (14) et le second appareil de traitement (14) est en outre connecté à l'oscillateur local (15) et à l'appareil de traitement numérique (11) ; l'appareil de traitement numérique (11) est configuré pour générer un premier signal de bande de base, réaliser une compensation non linéaire sur le premier signal de bande de base et émettre le premier signal de bande de base vers le premier appareil de traitement (12) ;

   le premier appareil de traitement (12) est configuré pour convertir le premier signal de bande de base en un premier signal radiofréquence et pour convertir le premier signal radiofréquence en un signal optique, le premier appareil de traitement (12) est en outre configuré pour émettre le signal optique vers le séparateur optique (13) ;
   le séparateur optique (13) est configuré pour séparer le signal optique en un premier signal optique et en un second signal optique, émettre le premier signal optique vers au moins un dispositif de communication côté distant (20) et émettre le second signal optique vers le second appareil de traitement (14) ;
   le second appareil de traitement (14) est configuré pour convertir le second signal optique en un second signal radiofréquence, convertir le second signal radiofréquence en un second signal de bande de base et émettre le second signal de bande de base vers l'appareil de traitement numérique (11) ; et
   l'appareil de traitement numérique (11) est en outre configuré pour réaliser la compensation non linéaire sur le premier signal de bande de base sur la base du premier signal de bande de base et du second signal de bande de base.

2. Dispositif de communication (10) selon la revendication 1, dans lequel le premier signal de bande de base comprend N premiers sous-signaux de bande de base, le second signal de bande de base comprend N seconds sous-signaux de bande de base, le premier signal radiofréquence comprend N premiers sous-signaux radiofréquence, le second signal radiofréquence comprend N seconds sous-signaux radiofréquence, les premiers sous-signaux radiofréquence correspondent de manière biunivoque aux seconds sous-signaux radiofréquence sur la base de fréquences, et N est un nombre entier supérieur ou égal à 1 ;

   l'appareil de traitement numérique (11) comprend un groupe de ressources de bande de base (111) et un appareil de compensation non linéaire (112), dans lequel le groupe de ressources de bande de base (111) est connecté à l'appareil de compensation non linéaire (112), et l'appareil de compensation non linéaire (112) est en outre connecté séparément au premier appareil de traitement (12) et au second appareil de traitement (14) ;
   le groupe de ressources de bande de base (111) est configuré pour générer les N premiers sous-signaux de bande de base et émettre les N premiers sous-signaux de bande de base vers le premier appareil de traitement (12) en utilisant l'appareil de compensation non linéaire (112) ;
   le premier appareil de traitement (12) est particulièrement configuré pour convertir les premiers sous-signaux de bande de base en premiers sous-signaux radiofréquence, convertir les N premiers sous-signaux radiofréquence en signal optique ;
   le second appareil de traitement (14) est particulièrement configuré pour convertir le second signal optique en N seconds sous-signaux radiofréquence, convertir les seconds sous-signaux radiofréquence en seconds sous-signaux de bande de base ; et l'appareil de compensation non linéaire (112) est configuré pour réaliser une compensation non linéaire sur les premiers sous-signaux de bande de base sur la base des premiers sous-signaux de bande de base et des seconds sous-signaux de bande de base correspondant aux premiers sous-signaux de bande de base.

3. Dispositif de communication (10) selon la revendication 2, dans lequel une longueur d'onde du signal optique est de 1 310 nm.

4. Dispositif de communication (10) selon la revendication 2 ou 3, dans lequel, lorsque N est supérieur à 1, le dispositif de communication (10) comprend en outre un combinateur de domaines électriques (16), et le combinateur de domaines électriques (16) est connecté au premier appareil de traitement (12) ;

le premier appareil de traitement (12) est en outre particulièrement configuré pour émettre les premiers sous-signaux radiofréquence vers le combinateur de domaines électriques (16) ;
le combinateur de domaines électriques (16) est configuré pour combiner les N premiers sous-signaux radiofréquence et émettre un signal radiofréquence combiné vers le premier appareil de traitement (12) ; et
le premier appareil de traitement (12) est en outre particulièrement configuré pour convertir le signal radiofréquence combiné en signal optique.

5. Dispositif de communication (10) selon la revendication 4, dans lequel le dispositif de communication (10) comprend en outre un séparateur de domaines électriques (17), et le séparateur de domaines électriques (17) est connecté au second appareil de traitement (14) ;

le second appareil de traitement (14) est en outre particulièrement configuré pour émettre le second signal radiofréquence vers le séparateur de domaines électriques (17) ; et
le séparateur de domaines électriques (17) est configuré pour séparer le second signal radiofréquence en N seconds sous-signaux radiofréquence et émettre les N seconds sous-signaux radiofréquence vers le second appareil de traitement (14).

6. Dispositif de communication (10) selon la revendication 5, dans lequel le premier appareil de traitement (12) comprend un appareil de conversion de signal électro-optique (124) et N appareils de conversion numérique-analogique (121), le second appareil de traitement (14) comprend un appareil de conversion de signal optique-électrique (141) et N appareils de conversion analogique-numérique (144), il existe N oscillateurs locaux (15), et un oscillateur local (15) correspond à un appareil de conversion numérique-analogique (121) et à un appareil de conversion analogique-numérique (144) ; et
le combinateur de domaines électriques (16) est connecté séparément aux N appareils de conversion numérique-analogique (121) et à l'appareil de conversion de signal électro-optique (124), les N appareils de conversion numérique-analogique (121) sont en outre connectés à l'appareil de compensation non linéaire (112), chaque oscillateur local (15) est connecté séparément à un appareil de conversion numérique-analogique (121) correspondant et à un appareil de conversion analogique-numérique (144) correspondant, le séparateur optique (13) est connecté séparément à l'appareil de conversion de signal électro-optique (124) et à l'appareil de conversion de signal optique-électrique (141), le séparateur de domaines électriques (17) est connecté séparément à l'appareil de conversion de signal optique-électrique (141) et aux N appareils de conversion analogique-numérique (144), et les N appareils de conversion analogique-numérique (144) sont tous connectés à l'appareil de compensation non linéaire (112).

7. Dispositif de communication (10) selon la revendication 4, dans lequel le dispositif de communication (10) comprend en outre N commutateurs de domaines électriques (18), les commutateurs de domaines électriques (18) sont connectés séparément à l'oscillateur local (15) et au second appareil de traitement (14), et un commutateur de domaines électriques (18) correspond à un premier sous-signal radiofréquence ;

le commutateur de domaines électriques (18) est configuré pour commander une connexion et une déconnexion d'une liaison de retour d'un second sous-signal radiofréquence correspondant à un premier sous-signal radiofréquence ; et
le second appareil de traitement (14) est en outre particulièrement configuré pour convertir un second sous-signal radiofréquence de retour en un second sous-signal de bande de base.

8. Dispositif de communication (10) selon la revendication 7, dans lequel le premier appareil de traitement (12) comprend un appareil de conversion de signal électro-optique (124) et N appareils de conversion numérique-analogique (121), le second appareil de traitement (14) comprend un appareil de conversion de signal optique-électrique (141) et un appareil de conversion analogique-numérique (144), il existe N oscillateurs locaux (15), et un oscillateur local (15) correspond à un appareil de conversion numérique-analogique (121) et à un commutateur de domaines électriques (18) ; et
le combinateur de domaines électriques (16) est connecté séparément aux N appareils de conversion numérique-analogique (121) et à l'appareil de conversion de signal électro-optique (124), les N appareils de conversion numérique-analogique (121) sont en outre connectés à l'appareil de compensation non linéaire (112), chaque oscillateur local (15) est connecté à un appareil de conversion numérique-analogique (121) correspondant et à un commutateur de domaines électriques (18) correspondant, le séparateur optique (13) est connecté séparément à l'appareil de conversion de signal électro-optique (124) et à l'appareil de conversion de signal optique-électrique (141), l'appareil de conversion analogique-numérique (144) est connecté séparément à l'appareil de conversion de signal optique-électrique (141), aux N commutateurs de domaines électriques (18) et à l'appareil de compensation non linéaire (112).

9. Dispositif de communication (10) selon la revendication 2 ou 3, dans lequel, lorsque N est supérieur à 1, le dispositif de communication (10) comprend en outre un multiplexeur par répartition en longueur d'onde (19) et un démultiplexeur par répartition en longueur d'onde (19'), le multiplexeur par répartition en longueur d'onde (19) est connecté séparément au premier appareil de traitement (12) et au séparateur optique (13), et le démultiplexeur par répartition en longueur d'onde (19') est connecté séparément au séparateur optique (13) et au second appareil de traitement (14) ;

le premier appareil de traitement (12) est particulièrement configuré pour convertir les premiers sous-signaux radiofréquence en N premiers sous-signaux optiques, dans lequel le signal optique comprend les N premiers sous-signaux optiques ;
le multiplexeur par répartition en longueur d'onde (19) est configuré pour combiner les N premiers sous-signaux optiques et émettre un signal optique combiné vers le séparateur optique (13) ;
le démultiplexeur par répartition en longueur d'onde (19') est configuré pour séparer le second signal optique en N seconds sous-signaux optiques ; et
le second appareil de traitement (14) est en outre particulièrement configuré pour convertir les seconds sous-signaux optiques en seconds sous-signaux radiofréquence et convertir les seconds sous-signaux radiofréquence en N seconds sous-signaux de bande de base.

10. Dispositif de communication (10) selon la revendication 9, dans lequel le premier appareil de traitement (12) comprend N appareils de conversion numérique-analogique (121) et N appareils de conversion de signal électro-optique (124), un appareil de conversion numérique-analogique (121) correspond à un appareil de conversion de signal électro-optique (124), le second appareil de traitement (14) comprend N appareils de conversion de signal optique-électrique (141) et N appareils de conversion analogique-numérique (144), un appareil de conversion de signal optique-électrique (141) correspond à un appareil de conversion analogique-numérique (144), il existe N oscillateurs locaux (15), et un oscillateur local correspond (15) à un appareil de conversion numérique-analogique (121) et à un appareil de conversion analogique-numérique (144) ; et l'appareil de compensation non linéaire (112) est connecté aux N appareils de conversion numérique-analogique (121), chaque appareil de conversion numérique-analogique (121) est connecté à un appareil de conversion de signal électro-optique (124) correspondant et à un oscillateur local (15) correspondant, le multiplexeur par répartition en longueur d'onde (19) est connecté séparément aux N appareils de conversion de signal électro-optique (124) et au séparateur optique (13), le démultiplexeur par répartition en longueur d'onde (19') est connecté séparément aux N appareils de conversion de signal optique-électrique (141) et au séparateur optique (13), chaque appareil de conversion analogique-numérique (144) est en outre connecté à un appareil de conversion de signal optique-électrique (141) correspondant et à un oscillateur local (15) correspondant, et les N appareils de conversion analogique-numérique (144) sont tous connectés à l'appareil de compensation non linéaire (112).

11. Dispositif de communication (10) selon la revendication 9, dans lequel le dispositif de communication (10) comprend en outre 2N commutateurs de domaines électriques (18), l'oscillateur local (15) est connecté à N commutateurs de domaines électriques (18), les N commutateurs de domaines électriques (18) sont en outre connectés au second appareil de traitement (14), un commutateur de domaines électriques (18) correspond à un premier sous-signal radiofréquence, le second appareil de traitement (14) est en outre connecté à N commutateurs de domaines électriques (18) restants, un commutateur de domaines électriques (18) correspond à un second sous-signal radiofréquence, et un premier sous-signal radiofréquence correspond à un second sous-signal radiofréquence ;
le commutateur de domaines électriques (18) est configuré pour commander une connexion et une déconnexion d'une liaison de retour d'un second sous-signal radiofréquence correspondant à un premier sous-signal radiofréquence ; et
le second appareil de traitement (14) est en outre particulièrement configuré pour convertir un second sous-signal radiofréquence de retour en un second sous-signal de bande de base.

12. Dispositif de communication (10) selon la revendication 11, dans lequel le premier appareil de traitement (12) comprend N appareils de conversion numérique-analogique (121) et N appareils de conversion de signal électro-optique (124), un appareil de conversion numérique-analogique (121) correspond à un appareil de conversion de signal électro-optique (124), le second appareil de traitement (14) comprend N appareils de conversion de signal optique-électrique (141) et un appareil de conversion analogique-numérique (144), un appareil de conversion de signal optique-électrique (141) correspond à un commutateur de domaines électriques (18), il existe N oscillateurs locaux (15), et un oscillateur local (15) correspond à un appareil de conversion numérique-analogique (121), à un commutateur de domaines électriques (18) et à un appareil de conversion analogique-numérique (144) ; et l'appareil de compensation non linéaire (112) est connecté aux N appareils de conversion numérique-analogique (121), chaque appareil de conversion numérique-analogique (121) est connecté à un appareil de conversion de signal électro-optique (124) correspondant et à un oscillateur local (15) correspondant, chaque oscillateur local (15) est en outre connecté à un commutateur de domaines électriques (18) correspondant, le multiplexeur par répartition en longueur d'onde (19) est connecté séparément aux N appareils de conversion de signal électro-optique (124) et au séparateur optique (13), le démultiplexeur par répartition en longueur d'onde (19') est connecté séparément aux N appareils de conversion de signal optique-électrique (141) et au séparateur optique (13), chaque appareil de conversion de signal optique-électrique (141) est connecté à un commutateur de domaines électriques (18) correspondant, les 2N commutateurs de domaines électriques (18) sont tous connectés à l'appareil de conversion analogique-numérique (144), et l'appareil de conversion analogique-numérique (144) est en outre connecté à l'appareil de compensation non linéaire (112).

13. Dispositif de communication (10) selon la revendication 6, 8, 10 ou 12, dans lequel le premier appareil de traitement (12) comprend en outre N premiers mélangeurs de fréquences (122) et N filtres passe-bande (123), un appareil de conversion numérique-analogique (121) correspond à un premier mélangeur de fréquences (122), à un filtre passe-bande (123) et à un oscillateur local (15), lorsque le second appareil de traitement (14) comprend N appareils de conversion analogique-numérique (144), le second appareil de traitement (14) comprend en outre N seconds mélangeurs de fréquences (142) et N filtres passe-bas (143), et un appareil de conversion analogique-numérique (144) correspond à un second mélangeur de fréquences (142), à un filtre passe-bas (143) et à un oscillateur local (15) ; chaque premier mélangeur de fréquences (122) est connecté à un appareil de conversion numérique-analogique (121) correspondant, à un filtre passe-bande (123) correspondant et à un oscillateur local (15) correspondant, et chaque filtre passe-bande (123) est en outre connecté au combinateur de domaines électriques (16) ou à un appareil de conversion de signal électro-optique (124) correspondant ; et chaque second mélangeur de fréquences (142) est connecté à un filtre passe-bas (143) correspondant et à un oscillateur local (15) correspondant, et chaque second mélangeur de fréquences (142) est en outre connecté au séparateur de domaines électriques (17) ou à un appareil de conversion de signal optique-électrique (141) correspondant.

14. Dispositif de communication (10) selon la revendication 6, 8, 10 ou 12, dans lequel le premier appareil de traitement (12) comprend en outre N premiers mélangeurs de fréquences (122) et N filtres passe-bande (123), un appareil de conversion numérique-analogique (121) correspond à un premier mélangeur de fréquences (122), à un filtre passe-bande (123) et à un oscillateur local (15), lorsque le second appareil de traitement (14) comprend un appareil de conversion analogique-numérique (144), le second appareil de traitement (14) comprend en outre un second mélangeur de fréquences (142) et un filtre passe-bas (143) ;

    chaque premier mélangeur de fréquences (122) est connecté à un appareil de conversion numérique-analogique (121) correspondant, à un filtre passe-bande (123) correspondant et à un oscillateur local (15) correspondant, chaque oscillateur local (15) est connecté au second mélangeur de fréquences (142) par le biais d'un commutateur de domaines électriques (18) correspondant, et chaque filtre passe-bande (123) est en outre connecté au combinateur de domaines électriques (16) ou à un appareil de conversion de signal électro-optique (124) correspondant ; et
    le second mélangeur de fréquences (142) est connecté au filtre passe-bas (143), le filtre passe-bas (143) est en outre connecté à l'appareil de conversion analogique-numérique (144), et les commutateurs de domaines électriques (18) sont tous connectés au second mélangeur de fréquences (142).

15. Système de communication, comprenant : le dispositif de communication (10) selon l'une quelconque des revendications 1 à 14, et au moins un dispositif de communication côté distant (20), dans lequel le dispositif de communication côté distant (20) comprend une antenne (22) ; et
    le dispositif de communication côté distant (20) est configuré pour convertir un premier signal optique provenant d'un dispositif de communication côté central (10) en un signal radiofréquence et transmettre le signal radiofréquence par le biais de l'antenne (22).

FIG. 1

FIG. 2

FIG. 3

EML

Bias voltage adjustment unit — Dispersion compensation unit

FIG. 4

EML

Higher-order nonlinear distortion compensation unit

Bias voltage adjustment unit — Dispersion compensation unit

FIG. 5

EML or DML

DPD compensation unit

FIG. 6

FIG. 7

EP 4 131 802 B1

FIG. 8

FIG. 9

FIG. 10

x(n)

Digital pre-distortion
module

Component in a RoF
Network System

Parameter estimation
module

y(n)

FIG. 11

FIG. 12

FIG. 13

FIG. 14

EP 4 131 802 B1

FIG. 15

FIG. 16

FIG. 17

FIG. 18

FIG. 19

FIG. 20

FIG. 21

FIG. 22

FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010361731
- WO 2019228608 A1
- WO 2019210783 A1